(19) Europäisches Patentamt
European Patent Office
Office européen des brevets

(11) **EP 4 742 191 A1**

(12) **EUROPEAN PATENT APPLICATION**
published in accordance with Art. 153(4) EPC

(43) Date of publication:
**13.05.2026 Bulletin 2026/20**

(21) Application number: **24844677.5**

(22) Date of filing: **17.07.2024**

(51) International Patent Classification (IPC):
**G06V 20/56** (2022.01)

(86) International application number:
**PCT/CN2024/105917**

(87) International publication number:
**WO 2025/020985 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 CN 202310911900**

(71) Applicant: **Huawei Technologies Co., Ltd.
Shenzhen, Guangdong 518129 (CN)**

(72) Inventors:
• **CAI, Xinyue
Shenzhen, Guangdong 518129 (CN)**
• **CAI, Feipeng
Shenzhen, Guangdong 518129 (CN)**
• **ZHAO, Xinhai
Shenzhen, Guangdong 518129 (CN)**
• **XU, Hang
Shenzhen, Guangdong 518129 (CN)**
• **WEN, Feng
Shenzhen, Guangdong 518129 (CN)**

(74) Representative: **Maiwald GmbH
Engineering
Elisenhof
Elisenstrasse 3
80335 München (DE)**

(54) **ROAD TOPOLOGY DETECTION METHOD, AND RELATED APPARATUS**

(57) A road topology detection method is provided and can be applied to the artificial intelligence field and the autonomous driving field. The method includes: obtaining target information, where the target information is data collected for a road condition of a target road; obtaining sequence information based on the target information by using a deep learning model, where the sequence information includes point information of feature points in a topology of the target road and edge information of a feature line in the topology of the target road, the point information includes physical positions and categories corresponding to the feature points, and the edge information includes a connection between the feature points and a connection direction; and determining the topology of the target road based on the sequence information. In this application, information about a node (the feature point) and an edge (the feature line) is directly predicted in one stage, thereby avoiding error accumulation of a whole road structure caused by errors in stages. In addition, data of the node and the edge is fused, to mutually reinforce each other in a network, thereby enhancing accuracy of a final result.

```
┌─────────────────────────────────────────────────────────┐
│ Obtain target information, where the target information  │── 901
│ is data collected for a road condition of a target road  │
└─────────────────────────────────────────────────────────┘
                          │
                          ▼
┌─────────────────────────────────────────────────────────┐
│ Obtain sequence information based on the target          │
│ information by using a deep learning model, where the    │
│ sequence information includes point information of       │── 902
│ feature points in a topology of the target road and edge │
│ information of a feature line in the topology of the     │
│ target road, the point information includes physical     │
│ positions and categories corresponding to the feature    │
│ points, and the edge information includes a connection   │
│ between the feature points and a connection direction    │
└─────────────────────────────────────────────────────────┘
                          │
                          ▼
┌─────────────────────────────────────────────────────────┐
│ Determine the topology of the target road based on the   │── 903
│ sequence information                                     │
└─────────────────────────────────────────────────────────┘
```

FIG. 9

## Description

This application claims priority to Chinese Patent Application No. 202310911900.0, filed with the China National Intellectual Property Administration on July 21, 2023, and entitled "ROAD TOPOLOGY DETECTION METHOD AND RELATED APPARATUS", which is incorporated herein by reference in its entirety.

## TECHNICAL FIELD

This application relates to the field of artificial intelligence, and in particular, to a road topology detection method and a related apparatus.

## BACKGROUND

Artificial intelligence (artificial intelligence, AI) is a theory, a method, a technology, and an application system in which human intelligence is simulated, extended, and expanded via a digital computer or a machine controlled by a digital computer, to perceive an environment, obtain knowledge, and achieve an optimal result by using the knowledge. In other words, artificial intelligence is a branch of computer science, and seeks to learn essence of intelligence and produce a new intelligent machine that can react in a way similar to human intelligence. Artificial intelligence is to study design principles and implementation methods of various intelligent machines, so that the machines have perception, inference, and decision-making functions.

The first step of autonomous driving is to collect and process environment information and in-vehicle information. Obtaining environment information around a vehicle body is the basis and prerequisite for autonomous traveling of an intelligent vehicle. This involves technologies such as road structure recognition, vehicle detection, and pedestrian detection. A road structure is one of the most important information of a road surface, and can effectively guide the intelligent vehicle to travel along a compliant route. A road network includes three parts: lane centerlines, road key points, and a centerline connection, to fully represent information of the road structure, and is an important form of representing the road structure. Real-time detection of the road network is an important link in an intelligent driver assistance system. This technology helps assist in functions such as route planning and lane departure warning, and may provide reference for accurate navigation.

Road network prediction is a complex task that requires overall perception and inference of a scenario, and extraction of information of the three parts: the lane centerlines, road key points, and centerline connection. The information includes Euclidean information such as shapes and positions of the centerlines and key points, and non-Euclidean information such as a road topology structure. It is a great challenge to accurately predict the two types of information.

In the conventional technology, the centerlines are first detected before the connection between the centerlines is predicted. The centerlines and the connection are separately predicted, and are not associated. The two-stage prediction causes information loss and error accumulation. For example, a deviation of the centerline detection and prediction causes inaccurate prediction of the connection, resulting in poor prediction accuracy of a road topology.

## SUMMARY

This application provides a road topology detection method, to improve prediction accuracy of a road topology.

According to a first aspect, this application provides a road topology detection method, including: obtaining data (namely, target information) collected for a road condition of a target road, and processing the target information by using a deep learning model, to obtain sequence information that can uniquely determine a topology of the target road, where the sequence information is represented as point information of feature points in the topology of the target road and edge information of a feature line in the topology of the target road, the point information includes physical positions and categories corresponding to the feature points, and the edge information includes a connection between the feature points and a connection direction; and determining the topology of the target road based on the sequence information.

The deep learning model may be a language model or another deep learning model, or a model formed by combining these models in a serial, parallel, or cascade manner.

In the conventional technology, centerlines are usually first detected before a connection between the centerlines is predicted or post-processed. The centerlines and the connection are separately predicted, and are not associated. The two-stage prediction causes information loss and error accumulation. For example, a deviation of the centerline detection and prediction causes less accurate prediction of the connection. In addition, two types of data cannot be fused for the two relatively separate stages of prediction. Fusion of the two types of data enables the model to better perceive a whole road network. Position information and shape information of the centerlines help predict the connection between the centerlines, and the connection between the centerlines helps predict positions and shapes. In the conventional technology, interaction of the two types of information is not implemented, limiting performance of the model.

In this embodiment of this application, a node (the feature point) and an edge (the feature line) is directly predicted in one stage, thereby avoiding error accumulation of a whole road structure caused by errors in stages. In addition, data of the node and the edge is fused, to mutually reinforce each other in a network, thereby enhancing accuracy of a final result. In addition, due to change of a prediction mechanism, in this embodiment of this application, pre-training can be performed by using a road topology alone without original data. This is not possible in the conventional solution.

In a possible implementation, the feature point is a road key point, a lane line key point, a lane centerline key point, or a road topology derivative point on the target road, and the feature line is a lane line segment, a lane centerline segment, a road segment, or a traffic entity.

In a possible implementation, the edge information further includes a shape feature of the feature line.

In a possible implementation, information about the topology further includes an order of the feature points, and the order is consistent with an order obtained by performing a topological sorting method specified in a graph theory on the feature points.

In a possible implementation, the topological sorting method is depth-first traversal, breadth-first traversal, or a topological sorting method obtained through network learning.

In a possible implementation, the category is one of the following:

a start node, a relay node, a fork node, and a merge node.

In a possible implementation, obtaining the sequence information based on the target information by using the deep learning model includes: obtaining first sequence information and confidence of each basic unit in the first sequence information based on the target information and a first mask result by using the deep learning model, where the first mask result is an output mask result of an intermediate iteration process of the language model; masking a basic unit, in the first sequence information, whose confidence is less than a threshold, to obtain a second mask result; and obtaining second sequence information based on the target information and the second mask result by using the deep learning model, where the second sequence information is for obtaining the sequence information.

In an inference stage, an initial sequence fully padded with masks may be input into the language model, so that the language model predicts a masked token. Certainly, during the first prediction, the language model faces a whole sequence of all masks, and it may be unrealistic to predict all tokens at a time. Therefore, after the first prediction, filtering is performed once, a token with low confidence is reset to a mask, and a token with high confidence is retained. In this way, after a plurality of predictions, higher accuracy can be obtained for a new sequence. A quantity of predictions herein is actually much less than a length of the whole sequence. Overall, in this mechanism, a sequence can be fully predicted through only a few (less than 0.1 times a length of the sequence) predictions, thereby greatly reducing inference time.

In a possible implementation, the target information is image data or radar data, and pose information for collecting the image data or radar data.

According to a second aspect, this application provides a model training method. The method includes:

obtaining sequence information, where the sequence information includes point information of a first feature point and a second feature point in a topology of a target road and edge information of a first feature line and a second feature line in the topology of the target road, the point information includes physical positions and categories corresponding to the first feature point and the second feature point, and the edge information includes a connection between the first feature point and the second feature point and a connection direction;

determining a prediction value of the point information of the second feature point and a prediction value of the edge information of the second feature line based on the point information of the first feature point and the edge information of the first feature line by using a deep learning model; and

updating the language model based on the prediction values, the point information of the second feature point, and the edge information of the second feature line.

In a possible implementation, the sequence information is determined based on image data, radar data, or map data.

According to a third aspect, this application provides a data processing apparatus. The apparatus includes:

an obtaining module, configured to obtain target information, where the target information is data collected for a road condition of a target road; and

a processing module, configured to: obtain sequence information based on the target information by using a deep learning model, where the sequence information includes point information of feature points in a topology of the target road and edge information of a feature line in the topology of the target road, the point information includes physical positions and categories corresponding to the feature points, and the edge information includes a connection between the feature points and a connection direction; and

determine the topology of the target road based on the sequence information.

In a possible implementation, the feature point is a road key point, a lane line key point, a lane centerline key point, or a road topology derivative point on the target road, and the feature line is a lane line segment, a lane centerline segment, a road segment, or a traffic entity.

In a possible implementation, the edge information further includes a shape feature of the feature line.

In a possible implementation, information about the topology further includes an order of the feature points, and the order is consistent with an order obtained by performing a topological sorting method specified in a graph theory on the feature points.

In a possible implementation, the topological sorting method is depth-first traversal, breadth-first traversal, or a topological sorting method obtained through network learning.

In a possible implementation, the category is one of the following:

a start node, a relay node, a fork node, and a merge node.

In a possible implementation, the processing module is specifically configured to:

obtain first sequence information and confidence of each basic unit in the first sequence information based on the target information and a first mask result by using the deep learning model, where the first mask result is an output mask result of an intermediate iteration process of the language model;

mask a basic unit, in the first sequence information, whose confidence is less than a threshold, to obtain a second mask result; and

obtain second sequence information based on the target information and the second mask result by using the deep learning model, where the second sequence information is for obtaining the sequence information.

According to a fourth aspect, this application provides a model training apparatus. The apparatus includes:

an obtaining module, configured to obtain sequence information, where the sequence information includes point information of a first feature point and a second feature point in a topology of a target road and edge information of a first feature line and a second feature line in the topology of the target road, the point information includes physical positions and categories corresponding to the first feature point and the second feature point, and the edge information includes a connection between the first feature point and the second feature point and a connection direction;

a processing module, configured to determine a prediction value of the point information of the second feature point and a prediction value of the edge information of the second feature line based on the point information of the first feature point and the edge information of the first feature line by using a deep learning model; and

an updating module, configured to update the language model based on the prediction values, the point information of the second feature point, and the edge information of the second feature line.

In a possible implementation, the sequence information is determined based on image data, radar data, or map data.

According to a fifth aspect, an embodiment of this application provides a data processing apparatus. The apparatus may include a memory, a processor, and a bus system. The memory is configured to store a program. The processor is configured to execute the program in the memory, to perform the method according to any one of the optional implementations of the first aspect, and the method according to any one of the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, and the method according to any one of the optional implementations of the second aspect.

According to a seventh aspect, an embodiment of this application provides a computer program product, including code. When the code is executed, the method according to any one of the first aspect or the optional implementations of the first aspect, and the method according to any one of the optional implementations of the second aspect are implemented.

According to an eighth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

## BRIEF DESCRIPTION OF DRAWINGS

FIG. 1 is a diagram of a structure of an artificial intelligence main framework;

FIG. 2 is a diagram of a road topology according to an embodiment of this application;

FIG. 3 is a diagram of an application scenario according to an embodiment of this application;

FIG. 4 is a diagram of an application scenario according to an embodiment of this application;

FIG. 5 is a diagram of a system architecture according to an embodiment of this application;

FIG. 6 is a diagram of a system architecture according to an embodiment of this application;

FIG. 7 is a diagram of a cloud service according to an embodiment of this application;

FIG. 8 is a schematic flowchart of a data processing method according to an embodiment of this application;

FIG. 9 is a schematic flowchart of a data processing method according to an embodiment of this application;

FIG. 10A to FIG. 10D are a schematic coding flowchart according to an embodiment of this application;

FIG. 11 is a schematic flowchart of a method according to an embodiment of this application;

FIG. 12 is a diagram of a network structure according to an embodiment of this application;

FIG. 13 is a diagram of a network structure according to an embodiment of this application;

FIG. 14 is a diagram of a road topology prediction result according to an embodiment of this application;

FIG. 15 is a diagram of a network structure according to an embodiment of this application;

FIG. 16 is a schematic flowchart of a method according to an embodiment of this application;

FIG. 17 is a schematic flowchart of a method according to an embodiment of this application;

FIG. 18 is a schematic flowchart of a method according to an embodiment of this application;

FIG. 19 is a diagram of beneficial effect according to an embodiment of this application;

FIG. 20 is a diagram of a structure of a data processing apparatus according to an embodiment of this application;

FIG. 21 is a diagram of a structure of a data processing apparatus according to an embodiment of this application;

FIG. 22 is a diagram of a terminal device according to an embodiment of this application;

FIG. 23 is a diagram of a server according to an embodiment of this application; and

FIG. 24 is a diagram of a chip according to an embodiment of this application.

## DESCRIPTION OF EMBODIMENTS

The following describes embodiments of the present invention with reference to accompanying drawings in embodiments of the present invention. Terms used in embodiments of the present invention are merely intended to explain specific embodiments of the present invention, and are not intended to limit the present invention.
The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

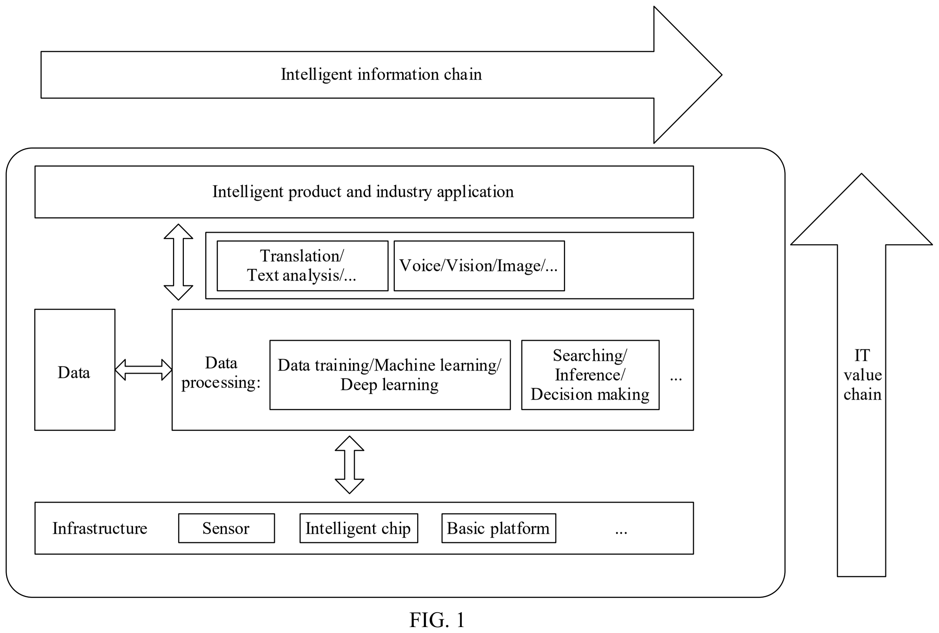

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from an underlying infrastructure and information (technology providing and processing implementation) of artificial intelligence to an industrial ecological process of a system.

(1) Infrastructure

The infrastructure provides computing capability support for an artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and sensing data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, pre-processing, training, and the like on data.
Inference is a process in which human intelligent inference is simulated in a computer or an intelligent system, to perform machine thinking and problem resolving by using formal information according to an inference control policy. A typical function is searching and matching.
Decision-making is a process of making a decision after intelligent information is inferred, and usually provides functions such as classification, sorting, and prediction.

(4) General capability

After data processing mentioned above is performed on the data, some general capabilities may be further formed based on a data processing result. For example, the general capabilities may be an algorithm or a general system such as translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent product and industry application mainly include intelligent terminals, intelligent transportation, intelligent health care, autonomous driving, smart cities, and the like.

Embodiments of this application may be applied to model training and optimization, and are specifically reflected in construction of training sample data. In embodiments of this application, when ground-truth labeling is performed on training sample data, after ground-truth labeling is performed on the training sample data, a training sample labeled with a ground-truth set is used for model training. An optimized and trained model according to this application may be specifically applied to road topology generation in the artificial intelligence field.

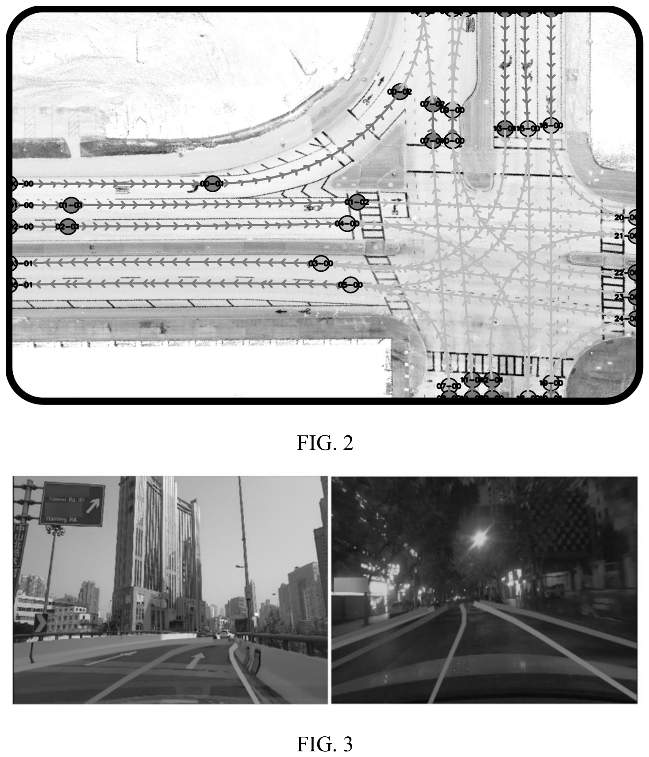

Road topology generation, also referred to as road network prediction, is a complex task that requires overall perception and inference of a scenario, and extraction of information of three parts: lane centerlines, road key points, and a centerline connection. The information includes Euclidean information like shapes and positions of the centerlines and key points, and non-Euclidean information like a road topology structure. It is a great challenge to accurately predict the two types of information. Few efforts are made in this aspect. In the early stage, aerial maps are used as inputs, and predicted road network structures are rough. This method that uses aerial maps as inputs cannot be directly applied to vehicle-mounted cameras, and cannot meet requirements of autonomous driving for online accurate mapping via vehicle-mounted cameras. Recently, some efforts are made to predict a road network by using an RGB image shot by a front camera as an input. Although this can meet basic requirements of autonomous driving, there is still much room for improvement in prediction effect. In a road network detection algorithm of the present invention, an image shot by a vehicle-mounted camera is used as a visual input, and a prediction result is obtained by using a neural network. The input and output of the road network detection algorithm are visualized as shown in FIG. 2. Compared with previous efforts, the algorithm in embodiments of this application not only meets the requirements of autonomous driving for online mapping via vehicle-mounted cameras, but also can further improve accuracy of road network prediction.

For example, embodiments of this application may be applied to scenarios such as autonomous driving or AR navigation.

Scenario 1: autonomous driving

With development of economy, the quantity of vehicles throughout the world increases continuously, and an occurrence rate of vehicle accidents also increases sharply, posing a great threat to people's lives and property. Therefore, the field of self driving is increasingly concerned by people. Human factors are main factors that cause traffic accidents. How to reduce human errors is an important issue in improving driving safety.

As shown in FIG. 3, in autonomous driving, road topology detection (for example, including lane line detection) significantly affects accurate positioning of an autonomous driving vehicle and driving decision-making. A road structure, as one of the most important information of a road surface, can effectively guide an intelligent vehicle to travel along a compliant route. A road network includes three parts: lane centerlines, road key points, and a centerline connection, to fully represent information of the road structure, and is an important form of representing the road structure. Real-time detection of the road network is an important link in an intelligent driver assistance system. This technology helps assist in functions such as route planning and lane departure warning, and may provide reference for accurate navigation.

Scenario 2: AR navigation

As the quantity of vehicles increases, the scope of people's activities expands accordingly. It is increasingly rare to drive to a destination by depending only on experience, and people are increasingly dependent on navigation for travel. In traditional navigation, a position of a vehicle is projected onto a map based on a GPS signal, navigation software plans a traveling route based on a set destination, and guides a user to the destination through screen display and voice broadcast. In this display manner, during driving, a driver needs to connect map guide information and voice broadcast information to the real world in which the vehicle is currently located, to understand a specific meaning of the guide information. During driving, a lane change opportunity may slip by quickly if navigation broadcast is missed at a fork. And real scenario information.

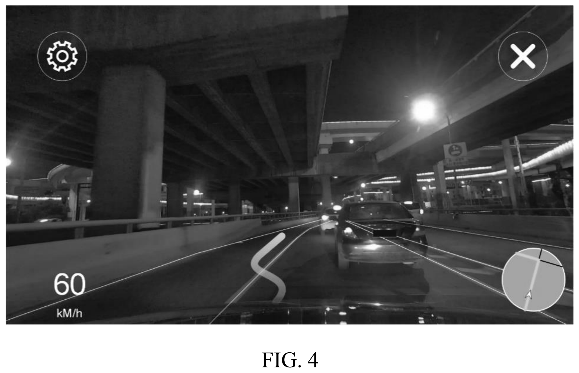

In AR navigation (as shown in FIG. 4), navigation information and a road network detection result are combined, so that a system can perform route planning on the vehicle based on the position of the vehicle and the road network detection result. This optimizes a display form of the guidance information, reduces receiving and understanding costs of the user as what you see is what you get, and the user only needs to act based on the navigation information. Accurate road network information and appropriate navigation information can be combined to effectively guide an intelligent vehicle to travel in a restricted road area, thereby improving user experience of onboard navigation software at a current stage.

It should be noted that, in embodiments of this application, a specific type of a model (which may be referred to as a language model in this application) for generating a road topology is not limited. For example, a target model in this application may be a transformer-based model, or may be a model based on another architecture. This is not specifically limited herein.

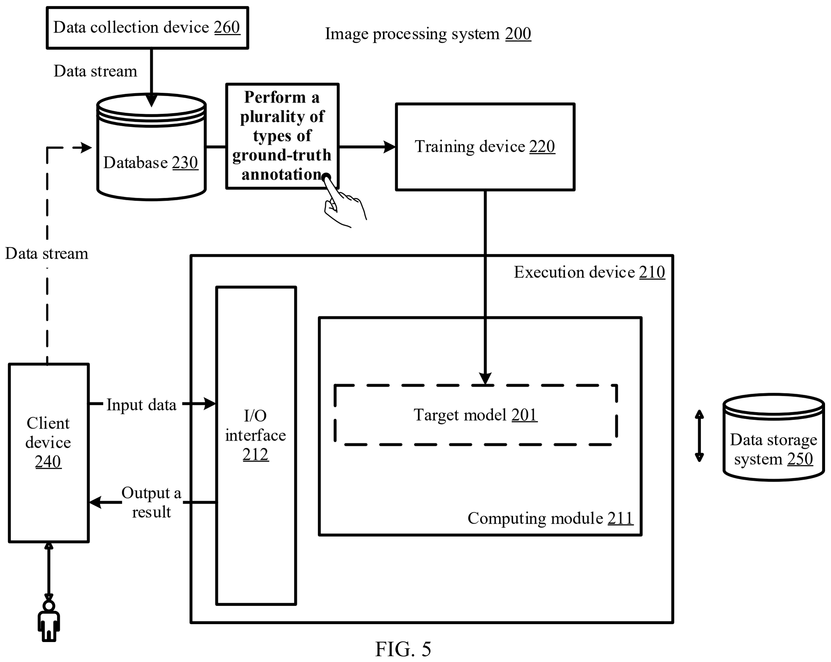

After the target model for generating a road topology is determined, the target model needs to be trained, and only the trained target model can be applied to a specific road topology generation task. Specifically, an entire process of training a target model and generating a road topology may be described based on an image processing system 200 shown in FIG. 5. In FIG. 5, the image processing system 200 includes an execution device 210, a training device 220, a database 230, a client device 240, a data storage system 250, and a data collection device 260. The execution device 210 includes a computing module 211. The computing module 211 is essentially a trained target model 201 provided in this embodiment of this application.

The data collection device 260 (for example, a camera mounted on a wheeled mobile device) is configured to obtain an open-source large-scale dataset (that is, a training set) required by a user, and store the dataset in the database 230. The training device 220 trains the target model 201 based on the dataset maintained in the database 230. It should be noted herein that, in this embodiment of this application, a plurality of types of ground-truth labeling need to be performed on a dataset maintained in the database 230. Specifically, ground-truth labeling needs to be performed on each training sample used by the training device 220. Such ground truth includes point information of feature points and line information of feature lines in a road topology. A corresponding road topology can be uniquely determined based on the labeled ground truth. On the contrary, a unique labeled ground truth can also be determined based on the road topology. Then, the target model 201 is trained by using the training samples labeled with ground truths.

The execution device 210 may invoke data, code, and the like in the data storage system 250, or may store data, instructions, and the like in the data storage system 250. The data storage system 250 may be disposed in the execution device 210, or the data storage system 250 may be an external memory relative to the execution device 210.

The target model 201 trained by the training device 220 may be used in a different system or device (that is, the execution device 210). For example, the execution device 210 may be any wheeled mobile device (a wheeled construction device, an autonomous driving vehicle, an assisted driving vehicle, and the like). The autonomous driving vehicle may further be a car, a truck, a motorcycle, a bus, a ship, an airplane, a helicopter, a lawn mower, an entertainment vehicle, a playground vehicle, a construction device, a tram, a golf cart, a train, a trolley, or the like.

Optionally, the execution device 210 may alternatively be a device having an AR or MR capability, for example, AR glasses.

In FIG. 5, an I/O interface 212 is configured for the execution device 210, to exchange data with an external device. A "user" may input data to the I/O interface 212 via the client device 240. For example, the client device 240 may be a camera device or a radar mounted on the autonomous driving vehicle (or the device having an AR or MR capability). An image shot by the camera device or data collected by the radar is used as input data and input to the computing module 211 of the execution device 210. The target model 201 in the computing module 211 processes the input image (optionally, may alternatively be the radar data) to obtain road topology information, then, the road topology information is output to a downstream module (for example, a device that performs autonomous driving) or is directly displayed on a display interface (if any) of the execution device 210. In addition, in some implementations of this application, the client device 240 may also be integrated into the execution device 210. For example, when the execution device 210 is an autonomous driving vehicle, an image may be directly shot by a camera of the autonomous driving vehicle or an image sent by another device (for example, a mobile phone) may be received, and then a result is obtained after the computing module 211 in the autonomous driving vehicle determines a road topology of the image, and directly presents the result on the vehicle-mounted display interface or transfers the result to a downstream task module. Product forms of the execution device 210 and the client device 240 are not limited herein.

It should be noted that FIG. 5 is merely a diagram of a system architecture according to this embodiment of this application, and a position relationship between devices, components, modules, and the like shown in the figure does not constitute any limitation. For example, in FIG. 5, the data storage system 250 is an external memory relative to the execution device 210. In another case, the data storage system 250 may alternatively be disposed in the execution device 210. In FIG. 5, the client device 240 is an external device relative to the execution device 210. In another case, the client device 240 may alternatively be integrated into the execution device 210.

It should be further noted that, in some implementations of this application, the target model 201 may be further split into a plurality of submodules/subunits to jointly implement solutions provided in embodiments of this application. This is not specifically limited herein.

It should be further noted that training of the target model 201 in this embodiment may be implemented on a cloud side. For example, the training device 220 (the training device 220 may be disposed on one or more servers or virtual machines) on the cloud side may obtain a training set (ground-truth labeling has been performed on training samples included in the training set), and train the target model based on the training samples in the training set, to obtain the trained target model 201. Then, the trained target model 201 is sent to the execution device 210 for application, for example, sent to a related system (for example, an ADAS or an ADS) of the autonomous driving vehicle. For example, in the system architecture corresponding to FIG. 5, the training device 220 performs overall training of the target model 201, and the trained target model 201 is then sent to the execution device 210 for use. Training of the target model 201 in this embodiment may also be implemented on a terminal side, that is, the training device 220 may be located on the terminal side. For example, the wheeled mobile device (for example, the autonomous driving vehicle or the assisted driving vehicle) may obtain a training set (ground-truth labeling has been performed on the training samples included in the training set), and train the target model 201 based on the training samples in the training set, to obtain the trained target model 201. Then, the trained target model 201 may be directly used by the terminal device, or may be sent by the terminal device to another device for use. Specifically, in this embodiment of this application, a device (a cloud side or a terminal side) on which the target model 201 is trained or applied is not limited.

The following uses an example in which the execution device 210 is deployed in a wheeled mobile device for description.

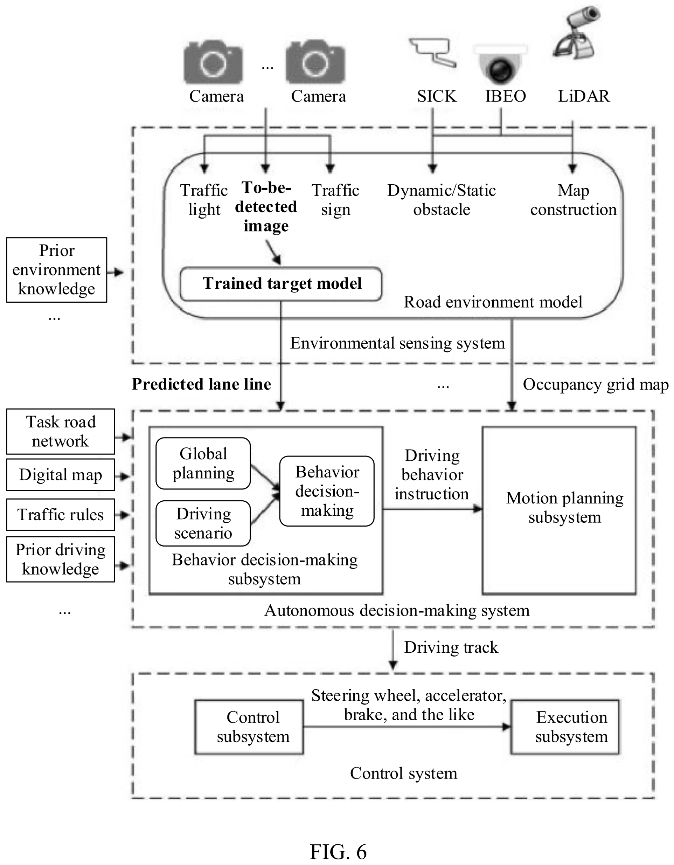

It should be noted that the trained target model 201 in FIG. 5 (or the execution device 210 in FIG. 5) may be deployed in any wheeled mobile device, and is configured to process related sensing information (for example, a video, an image, or radar data) on a road surface captured by a camera or a radar mounted on the wheeled mobile device, and output a road topology. The road topology is input to a downstream module of the wheeled mobile device for further processing. The following uses an example in which the wheeled mobile device is an autonomous driving vehicle to describe a deployment position of the trained target model and an overall architecture of the autonomous driving vehicle. For details, refer to FIG. 6. FIG. 6 shows a top-to-bottom hierarchical architecture. There may be a defined interface between systems, to transmit data between the systems, to ensure real-time performance and integrity of the data. The following briefly describes the systems.

(1) Environmental sensing system

Environmental sensing is a most basic part of an autonomous driving vehicle. Both driving behavior decision-making and global path planning need to be based on environmental sensing. Corresponding judgment, decision-making, and planning are performed based on a real-time sensing result of a road traffic environment, so that the vehicle implements intelligent driving.

The environmental sensing system mainly uses various sensors to obtain related environment information to construct an environment model and express knowledge of a traffic scenario. The used sensors include one or more cameras, a single-line radar (SICK), a four-line radar (IBEO), and a three-dimensional LiDAR (HDL-64E). A video or an image collected by a camera is mainly responsible for traffic light detection, lane line detection, road sign detection, vehicle recognition, and the like. Other LiDAR sensors are mainly responsible for detecting, identifying, and tracking key dynamic/static obstacles, and detecting and extracting non-key obstacles such as road boundaries, shrubs, and surrounding buildings. In this embodiment of this application, road surface-related sensing data captured by the camera, that is, a to-be-detected image of a road surface, is used. The to-be-detected image (which may be an image directly shot by the camera, or may be an image extracted from a video shot by the camera, and is not limited herein) is input into a trained target model constructed in this embodiment of this application. After being detected by the trained target model, a prediction result of a road topology in the to-be-detected image is output. The prediction result may be directly further processed by a downstream module (for example, an autonomous decision-making system) of the autonomous driving vehicle for further processing, or may be input into another model (for example, a map construction model, which is not shown in FIG. 5) in the environmental sensing system, and is used together with other sensing information to construct an occupancy grid map (occupancy grid map, OGM) that can express a road environment. Finally, the OGM is sent to the autonomous decision-making system for further decision and planning.

(2) Autonomous decision-making system

The autonomous decision-making system is a key component of the autonomous driving vehicle. The system is divided into two core subsystems: a behavior decision-making subsystem and a motion planning subsystem. The behavior decision-making subsystem mainly obtains a global optimal traveling route by running a global planning layer to specify a specific driving task, determines appropriate driving behavior based on current real-time road information sent by the environmental sensing system, road traffic rules, and driving experience, and sends such driving behavior instruction to the motion planning subsystem. The motion planning subsystem plans a feasible driving track based on the received driving behavior instruction, current local environmental sensing information, and indicators such as security and stability, and sends the feasible driving track to a control system.

(3) Control system

Specifically, the control system is also divided into two parts: a control subsystem and an execution subsystem. The control subsystem is configured to convert the feasible driving track generated by the autonomous decision-making system into specific execution instructions for execution modules, and transfer the execution instructions to the execution subsystem. After receiving the execution instructions from the control subsystem, the execution subsystem sends the execution instructions to control objects, to appropriately control steering, braking, the accelerator, and a gear of the vehicle, so that the vehicle automatically travels to complete a corresponding driving operation.

It should be noted that, in a traveling process of the autonomous driving vehicle, accuracy of the driving operation of the autonomous driving vehicle mainly depends on whether the specific execution instructions generated by the control system for the execution modules are accurate, and whether the specific execution instructions are accurate depends on the autonomous decision-making system. The autonomous decision-making system faces uncertainty. Factors of the uncertainty mainly include: (1) uncertainty caused by characteristics and calibration errors of the sensors in the environmental sensing system, where different sensors have different sensing mechanisms, sensing ranges, and corresponding error modes, and calibration errors caused by mounting the sensors on the autonomous driving vehicle are finally reflected in uncertainty of sensing information; (2) uncertainty caused by a data processing delay of the environmental sensing system, as the road environment is complex, and an amount of data information is large, resulting in a large computing amount in data processing of the environmental sensing system, and the entire environment is changing at all times, which inevitably causes a delay of data information and affects a correct judgment of the autonomous decision-making system; and (3) uncertainty further caused by different sensing information processing manners. In this embodiment of this application, if a conventional lane line detection method based on a regression manner or a segmentation manner is used, a problem of low lane line detection accuracy is caused. The existing lane line detection manner cannot meet an increasingly demanding application scenario of the autonomous driving vehicle. If the lane line detection accuracy can be improved, uncertainty of the autonomous decision-making system can be correspondingly reduced, thereby improving accuracy of the specific execution instructions generated by the control system for the execution modules.

It should be further noted that an overall architecture of the autonomous driving vehicle shown in FIG. 5 is merely an example. During actual application, more or fewer systems/subsystems or modules may be included, and each system/subsystem or module may include a plurality of components. This is not specifically limited herein.

In addition, a product form in this embodiment of this application may alternatively be a cloud service of a road topology determining type provided by a server.

In a possible implementation, the server may provide a service of a road topology determining function for a terminal side through an application programming interface (application programming interface, API).

A terminal device may send a related parameter (for example, data such as an image (for example, a surround view image) or radar data) to the server through the API provided by a cloud. The server may obtain a processing result or the like based on the received parameter), and return the processing result to the terminal.

For descriptions of the terminal and the server, refer to the descriptions in the foregoing embodiments. Details are not described herein again.

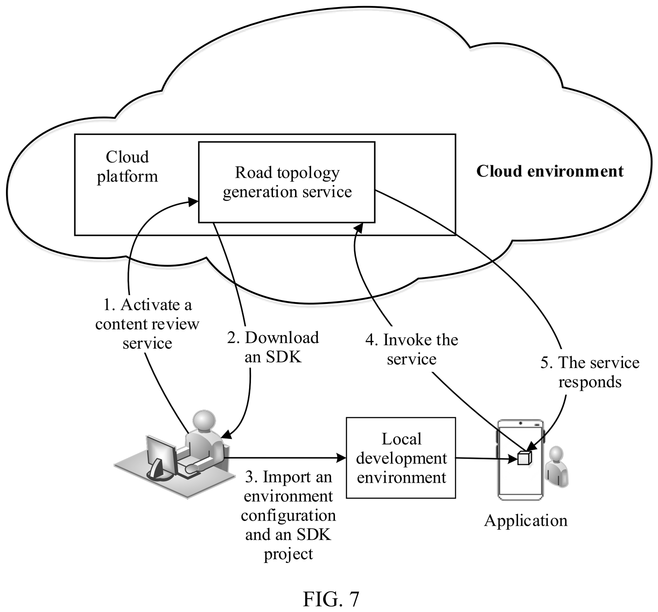

FIG. 7 shows a process of a cloud service of a road topology determining function type provided by a cloud platform.

1. Activate and purchase a content review service.

2. A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.

3. After locally downloading an SDK of a corresponding version based on the requirement, the user imports an SDK project to a local development environment, and performs configuration and debugging in the local development environment. Another function may be further developed in the local development environment, to form an application that integrates a capability of the road topology determining function type.

4. In a process of using an application of the road topology determining function type, when a road topology determining function needs to be performed, API calling of the road topology determining function may be triggered. When triggering the road topology determining function, the application initiates an API request to a running instance of the service of the road topology determining function type in a cloud environment. The API request carries an image, and the running instance in the cloud environment processes the image to obtain a processing result.

5. The cloud environment returns the processing result to the application. In this way, the road topology determining function is called once.

Embodiments of this application relate to massive application of a neural network. For ease of understanding, the following first describes related terms and related concepts such as the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^T x\right) = f(\sum\nolimits_{s=1}^{n} W_s x_s + b)$$

.

s=1, 2, ..., or n, n is a natural number greater than 1, Ws is a weight of xs, and b is a bias of the neuron. f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. Through use of NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(3) Deep neural network

The deep neural network (Deep Neural Network, DNN), also referred to as a multi-layer neural network, may be understood as a neural network having many hidden layers. The "many" herein does not have a special measurement standard. The DNN is divided based on positions of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of an operation at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained merely by performing such a simple operation on the input vector $\vec{x}$. Because the DNN includes many layers, there are also a large quantity of coefficients W and offset vectors $\vec{b}$. These parameters in the DNN are defined as follows: The coefficient W is used as an example. It is assumed that, in a three-layer DNN, a linear coefficient from a $4^{th}$ neuron at a $2^{nd}$ layer to a $2^{nd}$ neuron at a $3^{rd}$ layer is defined as $w_{24}^{3}$. The superscript 3 indicates a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Prompt prompt

Prompt is a natural language term, and includes a hard template and a soft template. The hard template is usually a natural language word or sentence with a specific meaning, and the soft template is usually a parameterized representation vector without a meaning.

The first step of autonomous driving is to collect and process environment information and in-vehicle information.

Obtaining environment information around a vehicle body is the basis and prerequisite for autonomous traveling of an intelligent vehicle. This involves technologies such as road structure recognition, vehicle detection, and pedestrian detection. A road structure, as one of the most important information of a road surface, can effectively guide the intelligent vehicle to travel along a compliant route. A road network includes three parts: lane centerlines, road key points, and a centerline connection, to fully represent information of the road structure, and is an important form of representing the road structure. Real-time detection of the road network is an important link in an intelligent driver assistance system. This technology helps assist in functions such as route planning and lane departure warning, and may provide reference for accurate navigation.

Road network prediction is a complex task that requires overall perception and inference of a scenario, and extraction of information of the three parts: the lane centerlines, road key points, and centerline connection. The information includes Euclidean information like shapes and positions of the centerlines and key points, and non-Euclidean information like a road topology structure. It is a great challenge to accurately predict the two types of information.

In the conventional technology, the centerlines are first detected before the connection between the centerlines is predicted. The centerlines and the connection are separately predicted, and are not associated. The two-stage prediction causes information loss and error accumulation. For example, a deviation of the centerline detection and prediction causes inaccurate prediction of the connection, resulting in poor prediction accuracy of a road topology.

With reference to the foregoing descriptions, embodiments of this application provide a model training method and a road topology prediction method, which are separately applied to a training stage and an inference stage of a model. The following separately provides description.

1. Training stage

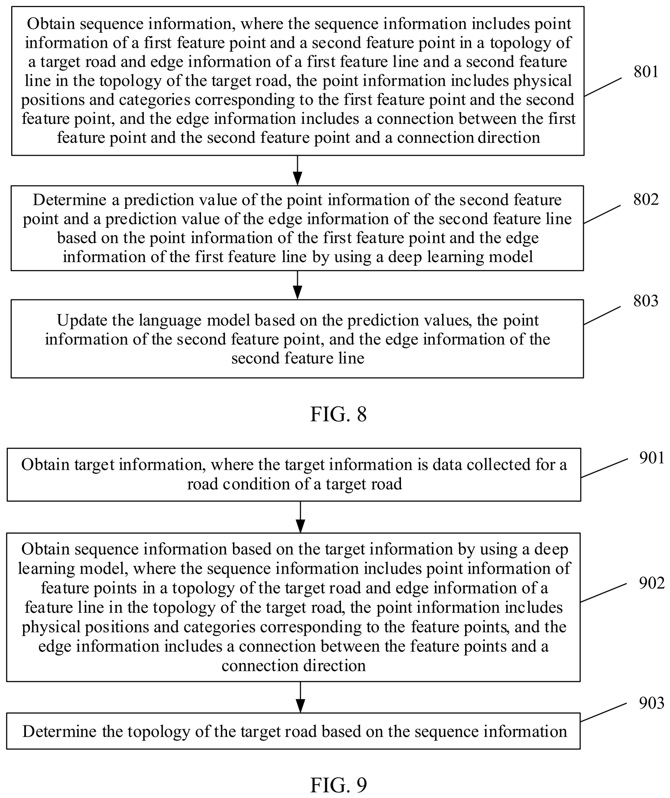

In embodiments of this application, the training stage is a process in which the training device 220 in FIG. 5 performs a training operation on the target model 201 by using the training samples in the training set. FIG. 8 is a schematic flowchart of a model training method according to an embodiment of this application. The method may specifically include the following steps.

801: Obtain sequence information, where the sequence information includes point information of a first feature point and a second feature point in a topology of a target road and edge information of a first feature line and a second feature line in the topology of the target road, the point information includes physical positions and categories corresponding to the first feature point and the second feature point, and the edge information includes a connection between the first feature point and the second feature point and a connection direction.

The training stage is a stage in which the model (for example, a language model) performs backpropagation based on labeled data to adjust a weight of the model. Training quality in the training stage determines inference accuracy in a subsequent inference stage.

The embodiment corresponding to FIG. 8 may be a model pre-training process, or a real training process (that is, a process of model fine tuning based on actually collected data).

In this embodiment of this application, the sequence information may be a training sample. In other words, the training sample of the language model may include sequence information obtained by coding sensing data collected by a sensor for a road condition of the road. Through training of the language model, the language model can have a capability of generating accurate road topology information based on the sensing data collected by the sensor. The accurate road topology information may be understood as that a corresponding accurate road topology can be uniquely determined based on the road topology information, and vice versa.

However, to enable the model to have the foregoing capability, a corresponding design needs to be performed on a ground truth (that is, the sequence information, or the road topology information, or coding information of the road topology) in the training sample.

The following describes the sequence information in this embodiment of this application.

A road network may include road feature points (for example, a stop line, a fork point, and a merge point) and a feature line. The feature points are sequentially connected by the feature line, to represent a road network (that is, a road topology, which should be understood as a dense graph by using a concept in a computer graph theory). Considering that each lane is always unidirectional, the road network may be further abstracted as a directed Acylic graph (DAG), and may be represented by the following formula: G=(V, E), where a vertex set V is a set of all road key points, and an edge set E is a set of centerlines of all connected key points. A point in the directed graph (or a clone point obtained through splitting based on a point in the directed graph) may be a feature point in this embodiment of this application, and a line in the directed graph may be a feature line in this embodiment of this application.

Therefore, the road topology can be accurately represented by using the road feature points and the feature line.

The feature point may be a road key point on the road, and the key point may be a physical point, for example, a stop line, a fork point, or a merge point, or may be a virtual identifier, for example, a lane line segment, lane centerline segment, or a road segment.

The feature line may be a connection line between feature points, and the feature line may be a physical lane line, a centerline, or a traffic entity (for example, a traffic light).

In a possible implementation, the sequence information may include point information of a plurality of feature points and line information of a plurality of feature lines in the topology of the target road. In this embodiment of this application, the sequence information may uniquely represent the road topology based on the point information of the feature points and the line information of the feature lines.

The point information includes physical positions and categories of the feature points, and the edge information may include a connection between the feature points and a connection direction.

For example, the physical position of the feature point may be coordinates of the feature point (for example, a geometric position on a BEV plane).

The connection between the feature points may represent two feature points of two endpoints of a corresponding feature line, and point information of the two feature points based on the endpoints may represent a physical position of the feature line. Generally, a lane line is directional. Therefore, the line information may further include the direction of the connection between the feature points. The direction may be represented by using a start point and an end point (the direction is from the start point to the end point) of the two endpoints.

For example, a category of the feature point may be one of the following:
a parent node (which may also be referred to as an Ancestor (ancestor) node), a node that belongs to a child node of the parent node and that is adjacent to the parent node (which may also be referred to as a Lineal (lineal) node), a node that belongs to a child node of the parent node and that is not adjacent to the parent node (which may also be referred to as an Offshoot (offshoot) node), and a clone node.

Points are classified into four types: {Ancestor (ancestor), Lineal (lineal), Offshoot (offshoot), Clone (clone)}. A difference between lineal and offshoot is as follows: When a parent node has a plurality of child nodes, a child node that is first traversed during topological sorting is denoted as Lineal, and other child nodes are denoted as Offshoot. A reason for this classification is that it is convenient to restore a language sequence to RoadNet.

For example, the categories may also be a start point, an end point, a fork point, or a merge point.

In a possible implementation, each vertex $V=(vx, vy, vc) \in v$ includes two properties:

(1) a physical position, which may, for example, be represented by physical coordinates ($vx \in R$, $vy \in R$), and optionally, specifically represents a geometric position of a feature point on the BEV plane; and

(2) a category, that is, Vc. Vertexes can be classified into four categories: {start point, end point, fork point, merge point}. Each category represents the specific road topology from the perspective of the point.

Each edge $e=(es, et, epx, epy) \in e$ may include two properties:

(1) a connection between feature points, which may, for example, be represented by using a source node and a target node, that is, vertexes of an edge between a source (source) $es \in V$ and a target (target) etEV, or two connected feature points of an edge; and
(2) a shape feature, for example, a shape of a feature line that may be represented by using an intermediate control point ($epx \in R$, $epy \in R$) of a Bezier curve.

Euclidean G data may include vx, vy, epx, and epy, and non-Euclidean data may include vc, es, and the like. The RoadNet sequence proposed in this embodiment of this application is a method for uniformly representing Euclidean data and non-Euclidean data. After a tradeoff between accuracy and speed, for example, a sequence coding manner (that is, a method for obtaining sequence information) in this embodiment of this application may be but is not limited to the following two examples:

1. AR encoding method

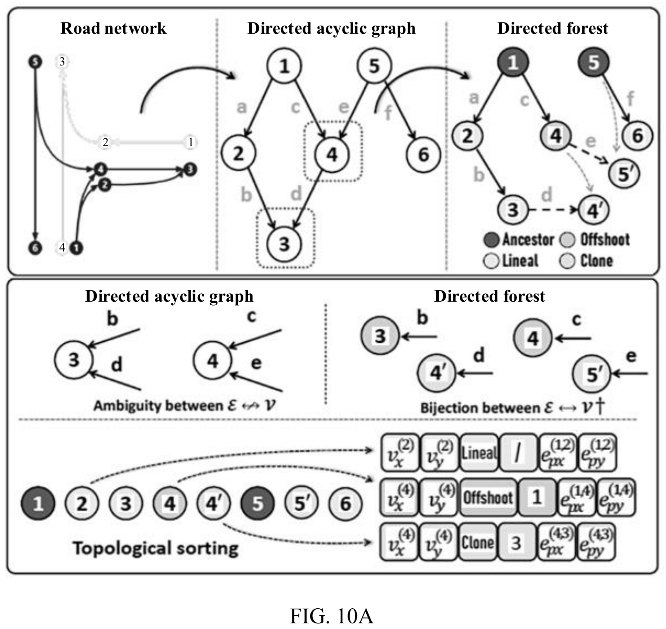

Refer to FIG. 10A. Construction from a road topology to sequence information may include three steps: (1) from a DAG to a directed forest; (2) topological sorting of the directed forest; and (3) construction of a topology sequence.

From the DAG to the directed forest: A typical DAG has a fuzzy relationship $(|V|)_{\leftrightarrow}[E|\}$ between quantities of vertexes and edges, and consequently, retaining all edges and vertexes results in redundant edge directions caused by repeated use of vertexes during indication. In contrast, a structure of the directed forest have a clear relationship $(|V| \leftrightarrow |E|)$ between the quantities of vertexes and edges, which avoids such redundancy. Therefore, the DAG can be transformed into the directed forest Gf=(Vf, Ef) by adding clone clone nodes. This transform has an advantage that a bijectiion between Ef and Vf can be found, and a set of all vertexes of Vf{$v \in Vf|id(v)=0$} is not a root, where id(v) represents a degree of introduction of the vertexes.

Topological sorting of the directed forest: For a single directed tree in the directed forest, a sorting method in the graph theory is used, for example, depth-first (or breadth-first) traversal, to obtain a node sequence in a language. For simplicity, a clone node is usually traversed after an original node, so that it is convenient for coding and error check. In addition, the topology sequence is restored to the original one.

Construction of the topology sequence: A final sequence includes sequentially sorted vertex-edge pairs. Each vertex-edge pair includes six integers (certainly, various variants of this algorithm are not limited to six integers, and may be four or more integers), where the six integers respectively represent: {x coordinate of a point, y coordinate of the point, type of the point, position of a parent node of the point in the topology sequence, Bessel parameter 1 of the edge, Bessel parameter 2 of the edge}. Points are classified into four types: {Ancestor (ancestor), Lineal (lineal), Offshoot (offshoot), Clone (clone)}. A difference between lineal and offshoot is as follows: When a parent node has a plurality of child nodes, a child node that is first traversed during topological sorting is denoted as Lineal, and other child nodes are denoted as Offshoot. A reason for this classification is that it is convenient to restore a language sequence to RoadNet.

The sequence constructed in this manner is constructed in a depth-first traversal order. Therefore, the RoadNet sequence has a forward dependency characteristic, and this characteristic is well compatible with the language model.

2. SAR coding mode

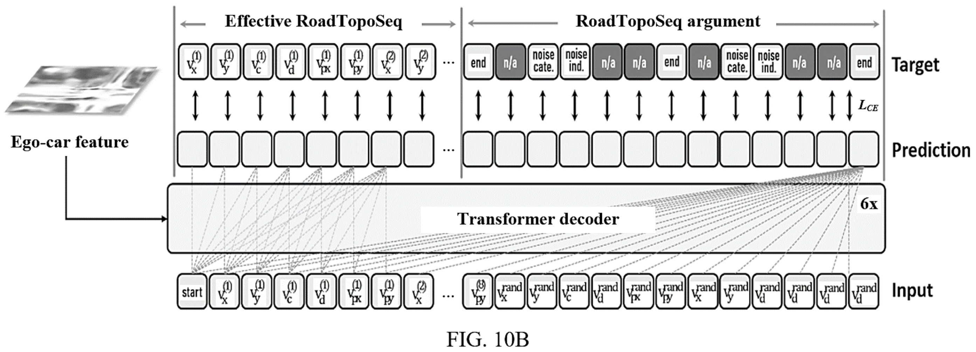

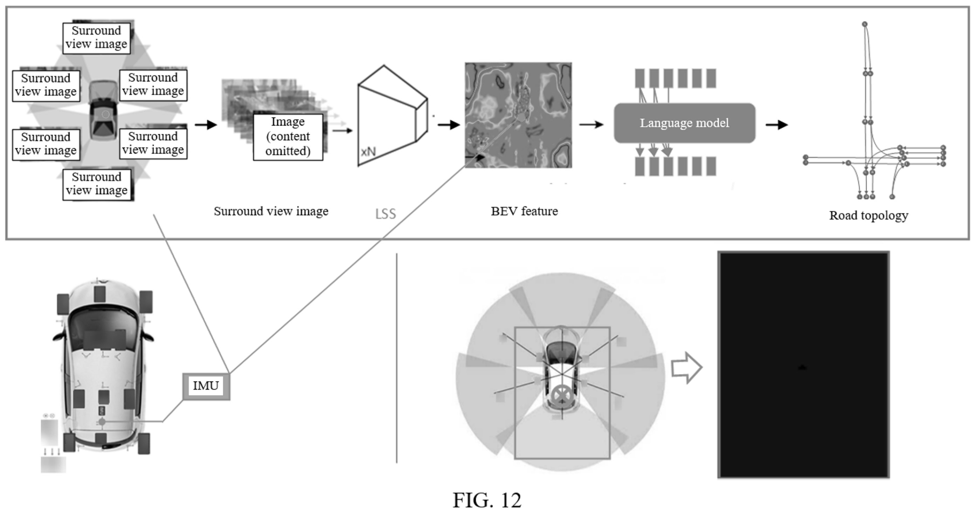

When an original autoregressive RoadNet model generates a sequence, a plurality of cycles are required. Only one single token in the sequence can be predicted each time. The entire process is time-consuming. A reason for using the autoregressive is a hypothesis in the field of natural language processing, that is, human languages are highly coherent, which means that any attempt to generate text without the autoregressive hypothesis may cause a significant decrease in accuracy. Refer to FIG. 10B. FIG. 10B is a schematic flowchart of processing data by a model. This is not completely the same for a road structure. For example, during generation of the road network in FIG. 2, positions of some road key points (a start point, a fork point, or a merge point) may be independent of a previous vertex due to a characteristic of a topology of the road key points. In addition to the positions of these road key points, performance of another token on the same line and having strong conditional dependency can be significantly improved by using the original autoregressive model. Based on these findings, Semi-RoadNet-Transformer (SAR-RNTR) is recommended. This method can significantly improve an inference speed. To cooperate with this method, a representation form of road topology information is a Semi-RoadNet sequence. The Semi-RoadNet sequence divides trees in a directed forest into smaller subtrees to infer each tree in parallel. Due to the above measures, an autoregressive length can be reduced to a size shown in FIG. 12. The following describes the coding process in detail.

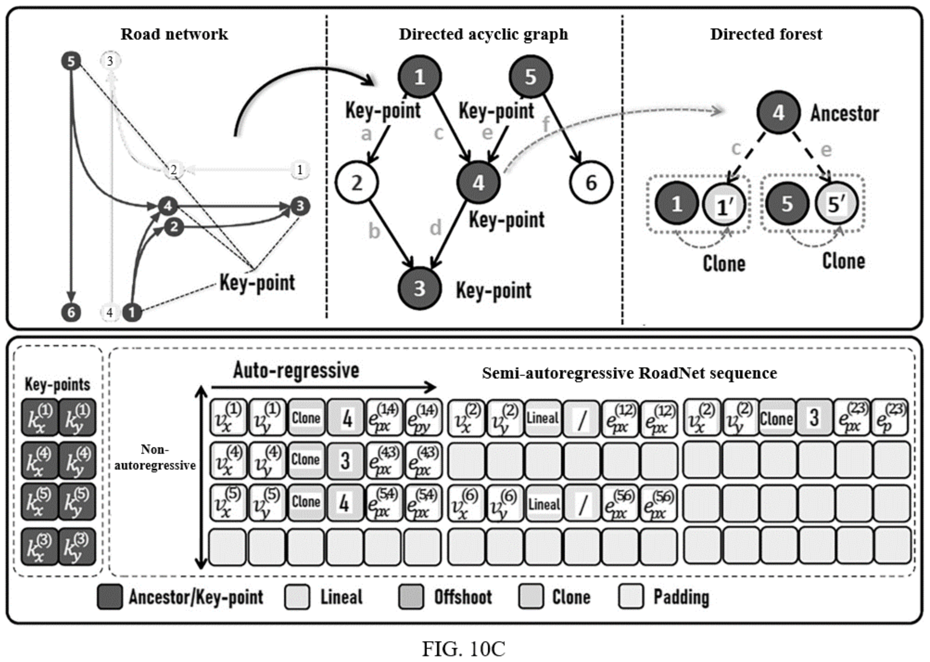

Specifically, all key points that meet a condition that an out degree od(v)>1 or an in degree id(v)=1 or an in degree id(v)=0 in a directed acyclic graph (DAG) may be determined. Then, their original parent trees and subtrees are recursively traversed, and the traversal stops when id(v)=0. An edge key point v and its parent node are restored, and a parent object is created and specified as the child object of v with a special label. Similarly, a clone is a vertex that is traversed only after this original point. As shown in FIG. 10C, in an autoregressive RoadNet sequence, an independent sequence may be created for each independent tree. Therefore, an SAR-RNTR sequence is a two-dimensional sequence. L is the maximum length of each subsequence, and M is quantity of subsequences. The figure below shows a padding rule. It should be noted that a new data structure is also a directed forest, so construction and restoration comply with the autoregressive RoadNet.

The SAR-RNTR is a two-dimensional sequence instead of a linear structure corresponding to the original language model. Therefore, the language model also needs to be adjusted accordingly. Specifically, the SAR-RNTR may be divided into three parts: (i) a BEV feature encoder, (ii) a key point transformer decoder, and (iii) a parallel sequence transformer decoder. The BEV feature encoder does not need to be modified, and is consistent with an encoder in an AR-RNTR. The key point transformer decoder is a parallel transformer decoder, uses a group of fixed position-embedding as an input, and predicts a key point. An output of the key point transformer decoder is the key point.

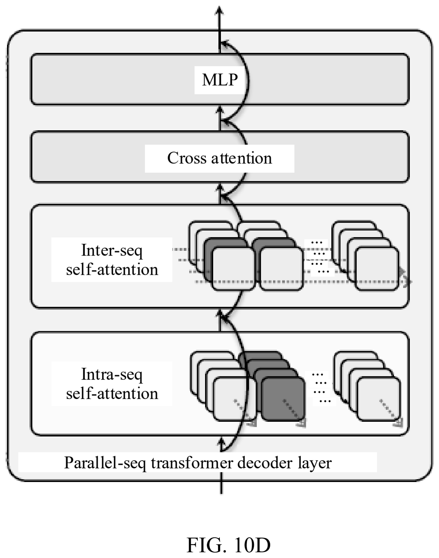

A reconstructed sequence obtained according to this embodiment of this application needs to be specially modified when attention is performed, and two types of attention are designed, which are temporarily referred to as inter-attention and intra-attention. As shown in FIG. 10D, in this way, memory complexity is reduced to $O(M2+L2) \ll O(M2 \times L2)$.

In this manner, sequence information in a training sample may include point information of feature points and line information of feature lines. In addition, the sequence information may further indicate an order of the feature points. The order may be a prediction order of a subsequent language model. As described in the foregoing embodiment, the order may be obtained by sorting the feature points by using a sorting method in the graph theory, for example, depth-first (or breadth-first) traversal. Through the foregoing ground-truth construction of training samples, the language model can generate each feature point in the sequence information in the order obtained by sorting the feature points by using the sorting method in the graph theory.

In a possible implementation, the sequence information may be generated based on image data, radar data, or map data (for example, a high-definition map). Currently, an existing high-precision map can cover all roads and intersections in at least six cities, and includes many complex road topologies. Optionally, in a pre-training process, surround view pictures from cameras may not be required. During pre-training, GTs of the high-precision map are directly used to synthesize a road topology language, to perform generative pre-training.

In this embodiment of this application, the model may be pre-trained through self-supervised training. Specifically, in a training task, the sequence information may be used as an input of the language model, and the language model may sequentially predict each unit (for example, information about a feature point) in the sequence information. After each step of prediction, a next step of prediction may be performed based on a historical prediction result (that is, predicted sequence information).

In this embodiment of this application, point information of a first feature point and a second feature point and edge information of a first feature line and a second feature line in a topology of a target road may be obtained. The point information includes physical positions and categories corresponding to the first feature point and the second feature point, and the edge information includes a connection between the first feature point and the second feature point and a connection direction.

The point information of the first feature point and the line information of the first feature line may be predicted information in the sequence information, and the point information of the second feature point and the line information of the second feature line may be to-be-predicted information in the sequence information. In other words, in a feedforward process, the language model may process the point information of the first feature point and the line information of the first feature line, and predict the point information of the second feature point and the line information of the second feature line.

When an input sequence is constructed, it is only required to add an SOS (a special integer value, which is a constant indicating a start) to a constructed original sequence as the start. When an output sequence is constructed, it is only required to add an EOS (a special integer value, which is a constant indicating an end) to an end of the constructed original sequence. Then, a pair of language sequences that represent a road structure and that can be used for autoregressive supervision is obtained.

802: Determine the prediction value of the point information of the second feature point and the prediction value of the edge information of the second feature line based on the point information of the first feature point and the edge information of the first feature line by using a deep learning model.

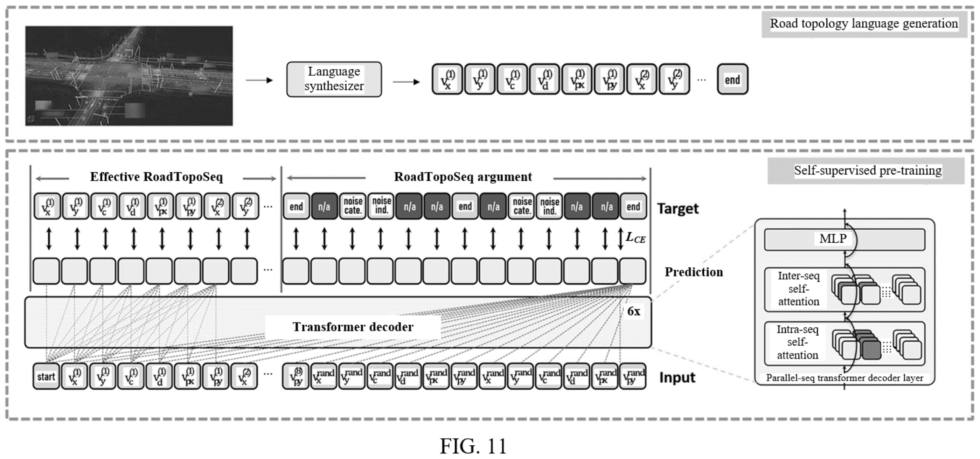

In this embodiment of this application, the model may be pre-trained through self-supervised training. Specifically, in a training task, only the road topology is pre-trained. According to a typical self-supervised paradigm, a prerequisite task can be used to drive coarse adjustment on a to-be-adjusted weight during pre-training, to accelerate network convergence. In addition, during design of a pre-training task, dependency of the pre-training task on manual labeling is specially reduced. In this way, an amount of pre-training data can be quickly increased, thereby greatly improving pre-training effect and a generalization capability of the model. A structure of the pre-training model may be shown in FIG. 11. An entire model is modeled as a high-precision map generation task, and an input and an output are both an original sequence, except that an SOS token is added to a header of the input sequence, and an EOS token is added to the output sequence. A baseline is designed as a BEV feature-based autoregressive RoadNet sequence generation model based on the conditional dependency of the RoadNet sequence.

803: Update the language model based on the prediction values, the point information of the second feature point, and the edge information of the second feature line.

A length of the RoadNet sequence with a length of L is denoted as y and a predicted RoadNet sequence is denoted as ŷ, and a loss function of the autoregressive RoadNet transformer is the maximum likelihood loss:

$$\max \sum_{i=1}^{L} w_i \log P(\hat{y}_i | y_{<i}, \mathcal{F})$$

.

yi is an $i^{th}$ token of y, y<i indicates all tokens before i, and wi indicates a class weight. In practice, because linearity of a label vc and an index 0 of vd appear most frequently, wj of these classes are set to a smaller value, so that a classification plane does not deviate.

In this embodiment of this application, a self-supervised pre-training solution is designed. In the training solution, manual labeling is not required, and data (for example, a surround view picture from a camera) does not need to be sensed. During pre-training, the sequence information provided in this embodiment of this application is directly used to represent the road topology, to perform generative pre-training.

In addition, this embodiment of this application provides an extensible road topology structured representation method. The sequence is predicted by using a sequence prediction capability and a logic learning capability of the language model, and finally the sequence may be decoded into a road network representation form.

In addition, the training process may be a fine tuning process performed on the pre-trained language model, that is, training is performed based on real data.

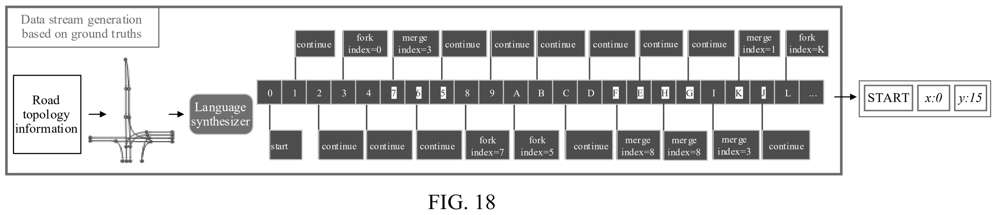

Ground truth generation is responsible for converting a complex road structure into a sequence. In an actual scenario, a road structure topology is relatively complex. Therefore, sufficient redundancy needs to be designed for this part to ensure that a corresponding topology can be safely predicted under an actual road condition. A schematic flowchart is shown in FIG. 18.

Specifically, an image capture apparatus mounted in a data collection vehicle, an autonomous driving vehicle, or the like may be used to capture a data set corresponding to a real scene scenario. Optionally, during collection of data, a multi-camera synchronization problem of surround view cameras needs to be noted, and internal and external parameters corresponding to each camera need to be retained.

A complex road structure in a corresponding data set can be manually labeled. Road scenarios may be classified into three types: a straight-line road, fork and merge road, and intersection road. It is easy to process the straight-line road. It is only required to directly label corresponding lane lines and centerlines. For the fork and merge road, topology connection is required for fork and merge positions. It is difficult label an intersection because there are no clear lines on the ground. In this case, all accessible virtual lines on the ground can be added during labeling.

A language synthesizer is used to convert a manually labeled result into a special sequence. The special sequence needs to meet a requirement of the autoregressive model and fully cover a road topology structure in a real scenario. For a specific coding scheme, refer to the descriptions in the foregoing embodiment. Details are not described herein again.

During full training, a pre-trained weight is loaded first, and then the ground truth generated in the previous step is used for full training. Steps of full training are similar to that for another deep learning model. The ground truth GT may be used as supervision, to finally obtain an effective network through iteration of a number theory. A valid definition herein is that an ideal evaluation result is obtained on a set test set. Then, we enter the inference stage. In the inference stage, the weight of the training stage needs to be used.

It should be noted that, in some implementations of this application, there may be a plurality of manners for determining a degree of training to be performed on the language model by using the loss function. The following provides some conditions for terminating training of the language model, including but not limited to:

(1) The loss function reaches a preset threshold.

After the loss function is configured, a threshold (for example, 0.03) may be preset for the loss function. In a process of performing iterative training on the language model, whether a value of a loss function obtained through a current round of training reaches the threshold is determined after each round of training is completed. If the preset threshold is not reached, the training continues. If the preset threshold is reached, the training is terminated. In this case, a value of a network parameter of a language model determined in the current round of training is used as a value of a network parameter of a finally trained language model.

(2) The loss function starts to converge.

After the loss function is configured, iterative training may be performed on the language model. If a difference between a value of a loss function obtained through a current round of training and a value of a loss function obtained through a previous round of training falls within a preset range (for example, 0.01), it is considered that the loss function converges, and the training may be terminated. In this case, a value of a network parameter of the language model determined in the current round of training is used as a value of a network parameter of a finally trained language model.

(3) Training reaches a preset quantity of times.

In this manner, a quantity of iterations (for example, 1000) of training on the language model may be preconfigured. After the loss function is configured, iterative training may be performed on the language model. After each round of training is completed, a value of a network parameter of a language model corresponding to the current round is stored until a quantity of iterations of training reaches the preconfigured quantity of iterations. Then, a language model obtained through each round of training is verified by using test data, and a value of a network parameter with best performance is selected as a value of a final network parameter of the language model.

2. Inference stage

In this embodiment of this application, the inference stage is a process in which the execution device 210 in FIG. 5 performs road topology detection by using the trained target model 201. For each to-be-detected image, in this application, the trained model may be used to predict a lane line, to obtain a final prediction result. The following describes this process in detail. For details, refer to FIG. 9. FIG. 9 is a schematic flowchart of a road topology detection method according to an embodiment of this application. The method may specifically include the following steps.

901: Obtain target information, where the target information is data collected for a road condition of a target road.

In a possible implementation, the target information is image data or radar data, and pose information for collecting the image data or radar data. For example, the target information may be data collected by a vehicle-mounted surround view camera, a LiDAR, or a millimeter-wave radar.

Currently, at a downstream of autonomous driving sensing, including planning, control, and prediction, modeling is performed on a BEV plane. Therefore, a sensing result may be presented on the BEV plane, that is, the target information may be converted into a BEV feature.

There are two methods for presenting the sensing result on the BEV plane: (1) Design a sensing algorithm for a PV, and then project a sensed structure in the PV to the BEV plane. (2) Map a PV picture to the BEV plane based on camera parameters, and design a sensing algorithm on the BEV plane. Due to limitations on hardware of an autonomous driving vehicle, it is impossible to directly obtain a true BEV image via a camera. An approximate BEV can only be obtained, via cameras mounted surround the autonomous driving vehicle, through projection. As shown in FIG. 12, a coverage of the BEV is a position shown in the figure. Generally, a rear axle of the autonomous driving vehicle is more stable than a front axle, and a position of the rear axle can better represent a position of the autonomous driving vehicle. Therefore, an inertial navigation element is usually mounted at a position of a center point of the rear axle. On this basis, during calibration of the cameras of the autonomous driving vehicle, a coordinate system of inertial navigation is usually selected as a reference system for calibration. During actual operation, a center of the BEV feature is also usually set at a mounting position of the inertial navigation element, so that it is more convenient to convert the BEV feature.

A manner of obtaining the BEV feature in FIG. 12 may include: collecting a picture via surround view cameras, and converting the picture into a feature of the BEV plane by using a model. Currently, LSS is a manner to convert a PV input into a BEV plane feature map. In a branch of the LSS, a depth distribution is estimated and then used with the image feature for an outer product, and the feature in the PV is mapped to depths predicted by the network to obtain the BEV feature. The downstream uses the generated BEV feature to perform a static road structure recognition task. The depths used in the LSS is generated through depth estimation. Therefore, depths are robust during projection. For different vehicle models, different camera mounting angles are well compatible (certainly, camera parameters need to be as accurate as possible).

A mechanism involved in the LSS part is relatively complex. Therefore, during actual training, the LSS part needs to be pre-trained. In pre-training manners, lane line segmentation on the BEV plane is usually used as an auxiliary task. After several rounds of segmentation, a trained LSS model is connected to a backend language model to form an entire model, and then the entire model is trained in an end-to-end manner.

902: Obtain sequence information based on the target information by using a deep learning model, where the sequence information includes point information of feature points in a topology of the target road and edge information of a feature line in the topology of the target road, the point information includes physical positions and categories corresponding to the feature points, and the edge information includes a connection between the feature points and a connection direction.

The language model may be a model obtained through training according to the embodiment corresponding to FIG. 8.

In a possible implementation, the feature point is a road key point, a lane line key point, a lane centerline key point, or a road topology derivative point on the target road, and the feature line is a lane line segment, a lane centerline segment, a road segment, or a traffic entity.

In a possible implementation, the edge information further includes a shape feature of the feature line.

In a possible implementation, information about the topology further includes an order of the feature points, and the order is consistent with an order obtained by performing a topological sorting method specified in a graph theory on the feature points.

In a possible implementation, the topological sorting method is depth-first traversal, breadth-first traversal, or a topological sorting method obtained through network learning.

The language model may be an autoregressive model, and a topology of a road surface is predicted based on the generated BEV feature. The BEV feature output in the previous stage actually includes information about the road topology. In this step, the feature map including information about the road topology needs to be output as structured code (that is, the sequence information in this embodiment of this application) representing the road topology in a modeling manner. Optionally, in this step, prediction of the road topology structured code may be performed in an autoregressive manner, and a specific structure used is a transformer.

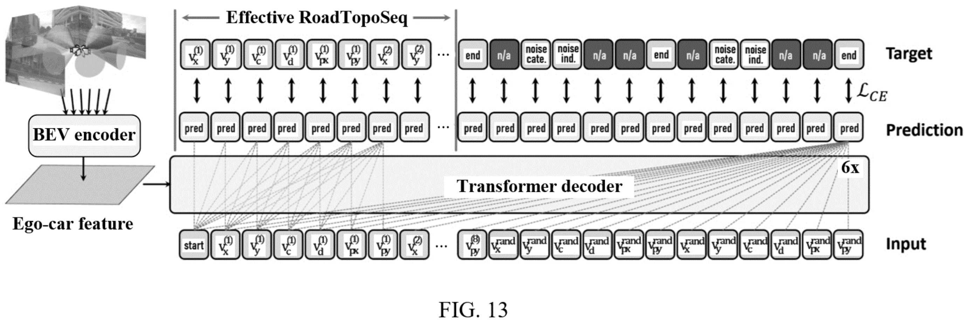

Refer to FIG. 13. During operation of this part, an agreed value SOS is first input into a network as a start of a sequence, and a first encoded token is output based on the start of the sequence. Then, the output first encoded token and the SOS are input into a transformer in parallel to obtain a second encoded token, and then the second encoded token is concatenated to an end of the last input. This cycle is repeated until a final output is an EOS.

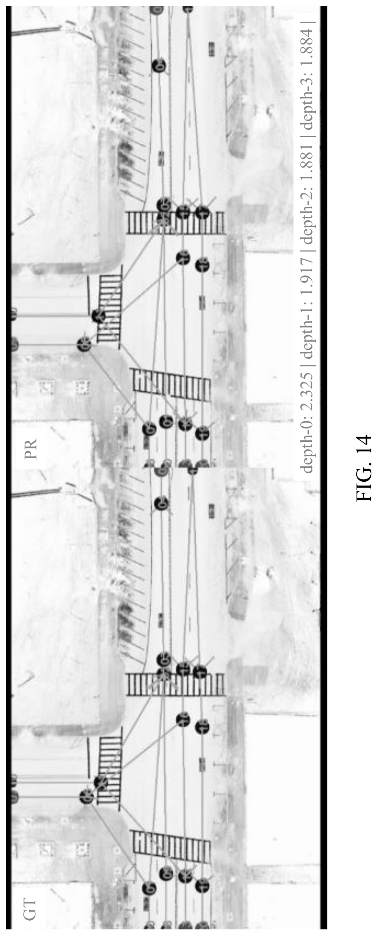

After deployment, a video stream can be obtained in real time on an autonomous driving vehicle. The model provided in this embodiment of this application can output a topology language for predicting a road structure, and a graph representing a real road structure can be obtained through corresponding decoding. The graph can be sent in a specific manner to provide corresponding information for the planning and control of the brake driving vehicle. Here, a prediction result on a nuscenes verification set is directly drawn on a BEV plane, with effect as shown in FIG. 14.

In the conventional technology, centerlines are usually first detected before a connection between the centerlines is predicted or post-processed. The centerlines and the connection are separately predicted, and are not associated. The two-stage prediction causes information loss and error accumulation. For example, a deviation of the centerline detection and prediction causes less accurate prediction of the connection. In addition, two types of data cannot be fused for the two relatively separate stages of prediction. Fusion of the two types of data enables a model to better perceive a whole road network. Position information and shape information of the centerlines help predict the connection between the centerlines, and the connection between the centerlines helps predict positions and shapes. In the conventional technology, interaction of the two types of information is not implemented, limiting performance of the model.

In this embodiment of this application, a node (the feature point) and an edge (the feature line) is directly predicted in one stage, thereby avoiding error accumulation of a whole road structure caused by errors in stages. In addition, data of the node and the edge is fused, to mutually reinforce each other in a network, thereby enhancing accuracy of a final result. In addition, due to change of a prediction mechanism, in this embodiment of this application, pre-training can be performed by using a road topology alone without original data. This is not possible in the conventional solution.

In a possible implementation, first sequence information and confidence of each basic unit in the first sequence information may be obtained based on the target information and a first mask result by using a deep learning model, where the first mask result is an output mask result of an intermediate iteration process of the language model; masking is performed on a basic unit, in the first sequence information, whose confidence is less than a threshold, to obtain a second mask result; and second sequence information is obtained based on the target information and the second mask result by using the deep learning model, where the second sequence information is for obtaining the sequence information.

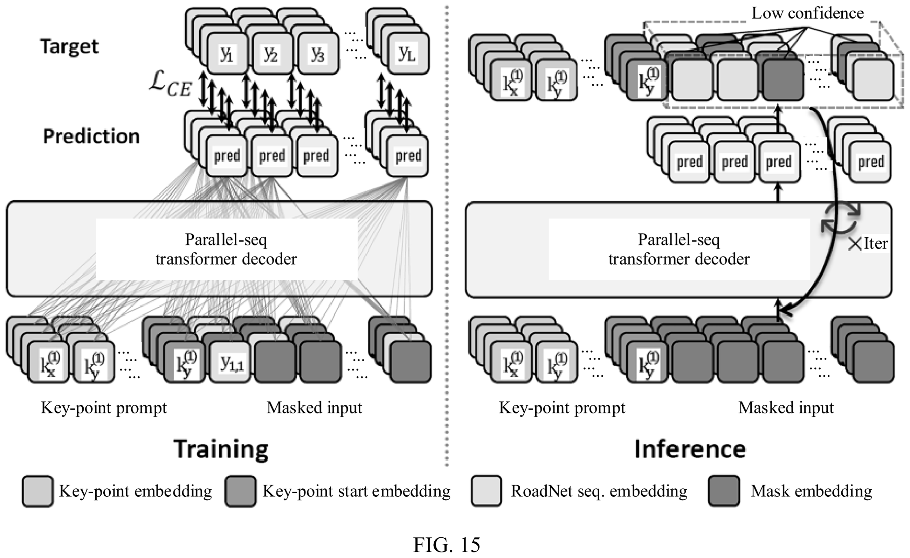

Refer to FIG. 15. In a training stage, a masked language modeling scheme may be used. A specific method is to randomly overwrite an input with a mask, input the masked input into a language model, and then drive the language model to predict a token covered by the mask. However, in an inference stage, an initial sequence fully padded with masks may be input into the language model, so that the language model predicts a masked token. Certainly, during the first prediction, the language model faces a whole sequence of all masks, and it may be unrealistic to predict all tokens at a time. Therefore, after the first prediction, filtering is performed once, a token with low confidence is reset to a mask, and a token with high confidence is retained. In this way, after a plurality of predictions, higher accuracy can be obtained for a new sequence. A quantity of predictions herein is actually much less than a length of the whole sequence. Overall, in this mechanism, a sequence can be fully predicted through only a few (less than 0.1 times a length of the sequence) predictions, thereby greatly reducing inference time.

903: Determine the topology of the target road based on the sequence information.

After the topology of the target road is obtained, the topology of the target road may be transferred to a downstream task module for a service like autonomous driving or AR navigation.

The following describes the method in embodiments of this application with reference to a specific example.

In this embodiment of this application, a sensing frontend is mainly configured to process a snapshot of a surrounding environment captured by a surround view camera mounted on the autonomous driving vehicle, and finally output, to a downstream, complex road structure information included in the environment in a form of a road network (Road Network) through snapshot processing.

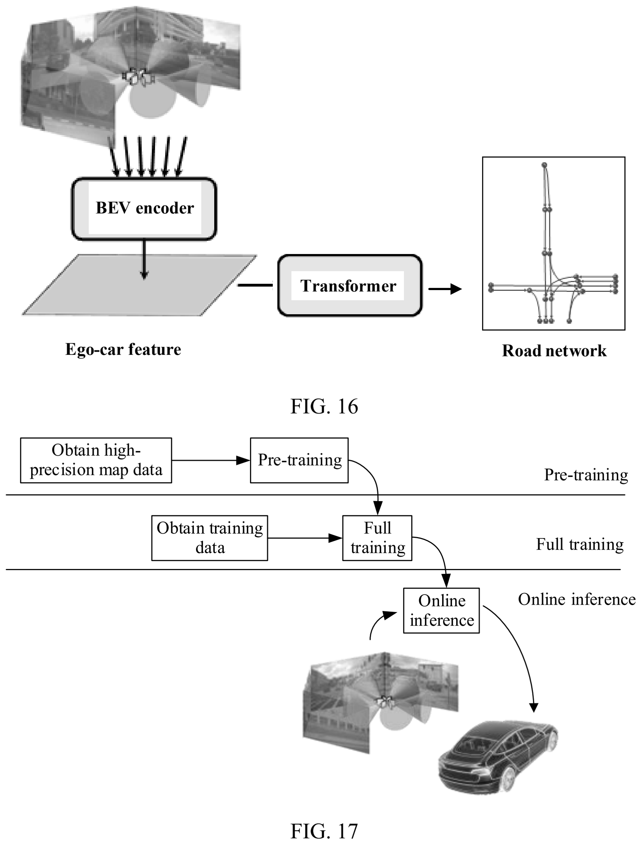

FIG. 16 is a diagram of inference according to an embodiment of this application. The inference is mainly divided into two parts: a BEV encoder and a transformer. The BEV encoder is mainly responsible for converting a surround view camera mounted on an autonomous driving vehicle into a feature representing a BEV plane. The transformer is mainly responsible for converting the feature of the BEV plane into a target road structure.

Refer to FIG. 17, an embodiment of this application includes two main stages: a training stage and an inference stage. In the inference stage, in a running state of a final deployment on an autonomous driving vehicle, a picture of a peripheral environment captured by a surrounding view camera is obtained. Then, a structured representation of road structure recognition is output through inference.

The following describes beneficial effect of this embodiment of this application with reference to experiments.

A quantitative result on a nuscenes data set in this embodiment of this application is compared with those in other solutions. For an evaluation method, refer to a TPLR paper. Through comparison of the results, it can be learned that the result in this embodiment of this application has obvious advantages over those of other algorithms. Compared with the latest operation, as shown in Table 1, this embodiment of this application can surpass the sota algorithm in terms of the nuscenes data set.

Table 1

| Methods | M-P | M-R | M-F | Detect | C-P | C-R | C-F |
|---|---|---|---|---|---|---|---|
| PINET [25] | 54.1 | 45.6 | 49.5 | 19.2 | - | - | - |
| Poly [1] | 54.7 | 51.2 | 52.9 | 40.5 | 58.4 | 16.3 | 25.5 |
| STSU [9] | 60.7 | 54.7 | 57.5 | 60.6 | 60.5 | 52.2 | 56.0 |
| TPLR [10] | - | - | 58.2 | 60.2 | - | - | 55.3 |
| AR-RNTR | 60.9 | 57.9 | 59.3 | 61.7 | 63.2 | 52.7 | 57.5 |
| SAR-RNTR | **63.5** | **59.9** | **61.6** | **63.5** | **67.1** | **57.2** | **61.7** |
| NAR-RNTR | 62.0 | 59.4 | 60.7 | 62.0 | 66.4 | 56.2 | 60.9 |
| NAR-RNTR† | **68.3** | **79.1** | **73.3** | **67.5** | **77.4** | **63.2** | **69.6** |

Visualized effect on the nuscenes data set in this solution is compared with that in other solutions, where TR-RNN and PTLR are embodiments in the TPLR paper.

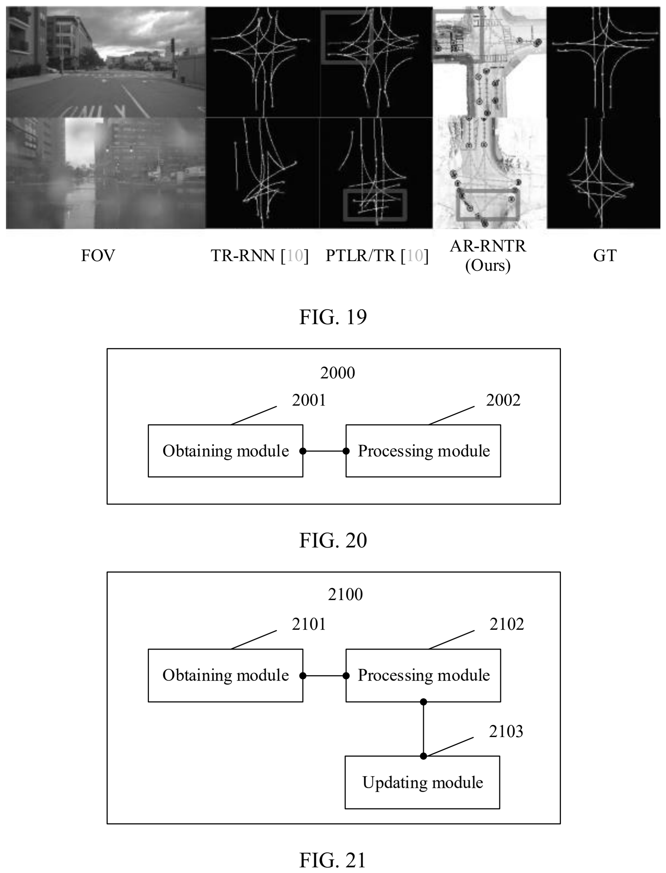

Refer to FIG. 19. FIG. 19 shows visualized effect on nuscenes data sets of an embodiment of this application and other methods. It can be learned from a block in FIG. 19 that effect of the AR-RNTR in this embodiment of this application is better than those of other algorithms in terms of details.

The following describes, from a perspective of an apparatus, a data processing apparatus provided in an embodiment of this application. FIG. 20 is a diagram of a structure of a data processing apparatus according to an embodiment of this application. As shown in FIG. 20, the data processing apparatus 2000 provided in this embodiment of this application includes:

an obtaining module 2001, configured to obtain target information, where the target information is data collected for a road condition of a target road; and

for specific descriptions of the obtaining module 2001, refer to the descriptions of step 901 in the foregoing embodiment, and details are not described herein again; and

a processing module 2002, configured to: obtain sequence information based on the target information by using a deep learning model, where the sequence information includes point information of feature points in a topology of the target road and edge information of a feature line in the topology of the target road, the point information includes physical positions and categories corresponding to the feature points, and the edge information includes a connection between the feature points and a connection direction; and

determine the topology of the target road based on the sequence information.

For specific descriptions of the processing module 2002, refer to the descriptions of step 902 and step 903 in the foregoing embodiment. Details are not described herein again.

In a possible implementation, the feature point is a road key point, a lane line key point, a lane centerline key point, or a road topology derivative point on the target road, and the feature line is a lane line segment, a lane centerline segment, a road segment, or a traffic entity.

In a possible implementation, the edge information further includes a shape feature of the feature line.

In a possible implementation, information about the topology further includes an order of the feature points, and the order is consistent with an order obtained by performing a topological sorting method specified in a graph theory on the feature points.

In a possible implementation, the topological sorting method is depth-first traversal, breadth-first traversal, or a topological sorting method obtained through network learning.

In a possible implementation, the category is one of the following:

a start node, a relay node, a fork node, and a merge node.

In a possible implementation, the processing module 2002 is specifically configured to:

obtain first sequence information and confidence of each basic unit in the first sequence information based on the target information and a first mask result by using the deep learning model, where the first mask result is an output mask result of an intermediate iteration process of the language model;

mask a basic unit, in the first sequence information, whose confidence is less than a threshold, to obtain a second mask result; and

obtain second sequence information based on the target information and the second mask result by using the deep learning model, where the second sequence information is for obtaining the sequence information.

FIG. 21 is a diagram of a structure of a data processing apparatus according to an embodiment of this application. As shown in FIG. 21, the data processing apparatus 2100 provided in this embodiment of this application includes:

an obtaining module 2101, configured to obtain sequence information, where the sequence information includes point information of a first feature point and a second feature point in a topology of a target road and edge information of a first feature line and a second feature line in the topology of the target road, the point information includes physical positions and categories corresponding to the first feature point and the second feature point, and the edge information includes a connection between the first feature point and the second feature point and a connection direction; and

for specific descriptions of the obtaining module 2101, refer to the descriptions of step 801 in the foregoing embodiment, and details are not described herein again;

a processing module 2102, configured to determine a prediction value of the point information of the second feature point and a prediction value of the edge information of the second feature line based on the point information of the first feature point and the edge information of the first feature line by using a deep learning model; and

for specific descriptions of the processing module 2102, refer to the descriptions of step 802 in the foregoing embodiment, and details are not described herein again; and

an updating module 2103, configured to update the language model based on the prediction values, the point information of the second feature point, and the edge information of the second feature line.

For specific descriptions of the processing module 2102, refer to the descriptions of step 803 in the foregoing embodiment. Details are not described herein again.

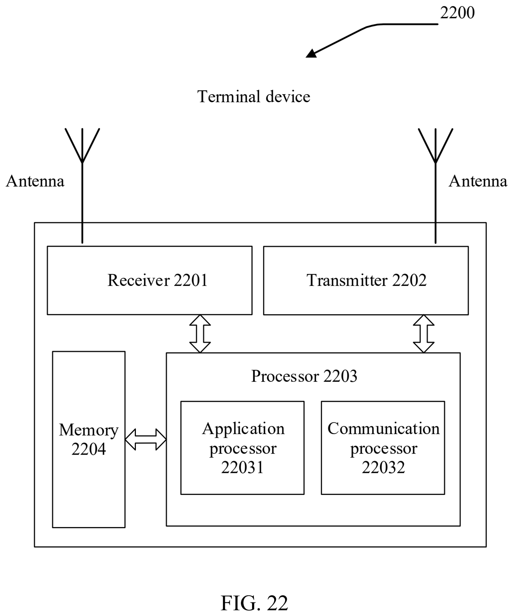

The following describes a terminal device provided in an embodiment of this application. FIG. 22 is a diagram of a structure of a terminal device according to an embodiment of this application. The terminal device 2200 may be specifically a mobile phone, a tablet, a notebook computer, an intelligent wearable device, or the like. This is not limited herein. The terminal device 2200 implements a function of the data processing method in the embodiment corresponding to FIG. 5. Specifically, the terminal device 2200 includes a receiver 2201, a transmitter 2202, a processor 2203, and a memory 2204 (there may be one or more processors 2203 in the terminal device 2200). The processor 2203 may include an application processor 22031 and a communication processor 22032. In some embodiments of this application, the receiver 2201, the transmitter 2202, the processor 2203, and the memory 2204 may be connected through a bus or in another manner.

The memory 2204 may include a read-only memory and a random access memory, and provide instructions and data to the processor 2203. A part of the memory 2204 may further include a non-volatile random access memory (non-volatile random access memory, NVRAM). The memory 2204 stores a processor and operation instructions, an executable module or a data structure, a subset thereof, or an extended set thereof. The operation instructions may include various operation instructions for implementing various operations.

The processor 2203 controls an operation of the terminal device. During specific application, components of the terminal device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 2203, or may be implemented by the processor 2203. The processor 2203 may be an integrated circuit chip and has a signal processing capability. In an implementation process, steps in the foregoing methods can be implemented by using a hardware integrated logical circuit in the processor 2203 or by using instructions in a form of software. The processor 2203 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 2203 may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2204. The processor 2203 reads information in the memory 2204, and completes steps 501 to 504 in the foregoing embodiment in combination with hardware of the processor 2203.

The receiver 2201 may be configured to: receive input digital or character information, and generate a signal input related to a related setting and function control of the terminal device. The transmitter 2202 may be configured to output digital or character information through a first interface. The transmitter 2202 may be further configured to send instructions to a disk group through the first interface, to modify data in the disk group. The transmitter 2202 may further include a display device like a display.

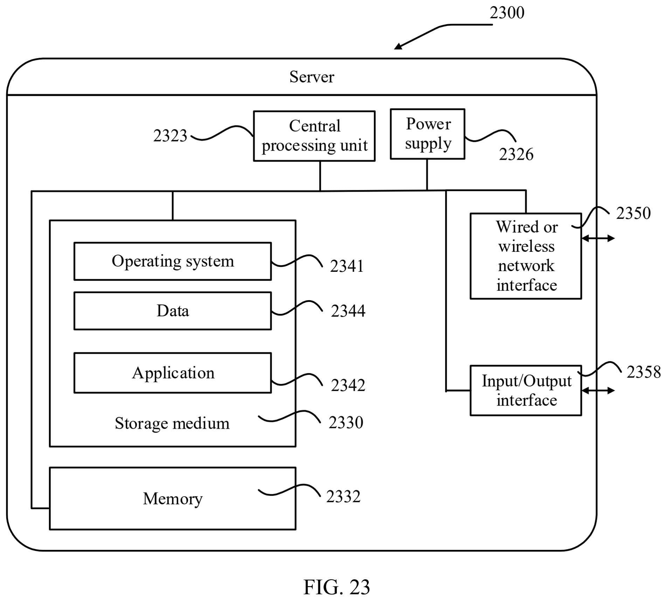

An embodiment of this application further provides a server. FIG. 23 is a diagram of a structure of a server according to an embodiment of this application. Specifically, a server 2300 is implemented by one or more servers. The server 2300 may greatly differ due to different configurations or performance, and may include one or more central processing units (central processing units, CPUs) 2323 (for example, one or more processors) and a memory 2332, one or more storage media 2330 (for example, one or more mass storage devices) that store an application 2342 or data 2344. The memory 2332 and the storage medium 2330 may be transient storages or persistent storages. A program stored in the storage medium 2330 may include one or more modules (not shown in the figure), and each module may include a series of instruction operations for the server. Further, the central processing unit 2323 may be configured to: communicate with the storage medium 2330, and perform, on the server 2300, the series of instruction operations in the storage medium 2330.

The server 2300 may further include one or more power supplies 2326, one or more wired or wireless network interfaces 2350, one or more input/output interfaces 2358, or one or more operating systems 2341, for example, Windows ServerTM, Mac OS XTM, UnixTM, LinuxTM, and FreeBSDTM.

Specifically, the server may perform steps 501 to 504 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

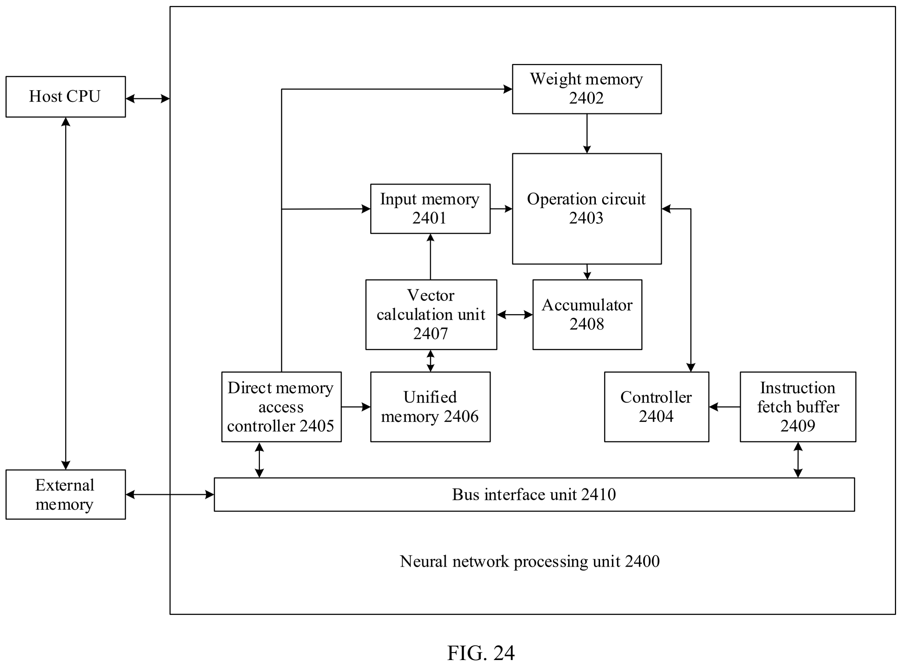

Specifically, FIG. 24 is a diagram of a structure of a chip according to an embodiment of this application. The chip may be represented as a neural network processing unit NPU 2400. The NPU 2400 is mounted to a host CPU (Host CPU) as a coprocessor, and the host CPU allocates a task. A core part of the NPU is an operation circuit 2403. The operation circuit 2403 is controlled by a controller 2404 to extract matrix data in a memory and perform a multiplication operation.

The NPU 2400 may implement, through cooperation between internal components, the data processing method provided in the embodiments described in FIG. 8 and FIG. 9.

More specifically, in some implementations, the operation circuit 2403 in the NPU 2400 includes a plurality of processing units (Process Engine, PE). In some implementations, the operation circuit 2403 is a two-dimensional systolic array. The operation circuit 2403 may alternatively be a one-dimensional systolic array or another electronic circuit that can perform mathematical operations such as multiplication and addition. In some implementations, the operation circuit 2403 is a general-purpose matrix processor.

For example, it is assumed that there is an input matrix A, a weight matrix B, and an output matrix C. The operation circuit fetches data corresponding to the matrix B from a weight memory 2402, and buffers the data on each PE in the operation circuit. The operation circuit fetches data of the matrix A from an input memory 2401, performs a matrix operation on the data and the matrix B, and stores an obtained partial result or final result of the matrix in an accumulator (accumulator) 2408.

A unified memory 2406 is configured to store input data and output data. Weight data is directly transferred to the weight memory 2402 through a direct memory access controller (Direct Memory Access Controller, DMAC) 2405. The input data is also transferred to the unified memory 2406 through the DMAC.

A BIU (Bus Interface Unit), that is, a bus interface unit 2410, is configured for interaction between an AXI bus and the DMAC and interaction between the AXI bus and an instruction fetch buffer (Instruction Fetch Buffer, IFB) 2409.

The bus interface unit (Bus Interface Unit, BIU for short) 2410 is used for the instruction fetch buffer 2409 to obtain instructions from an external memory, and is further used for the direct memory access controller 2405 to obtain raw data of the input matrix A or the weight matrix B from the external memory.

The DMAC is mainly configured to transfer input data in the external memory DDR to the unified memory 2406, transfer weight data to the weight memory 2402, or transfer input data to the input memory 2401.

A vector calculation unit 2407 includes a plurality of operation processing units. When necessary, further processing is performed on an output of the operation circuit 2403, such as vector multiplication, vector addition, an exponential operation, a logarithmic operation, and size comparison. The vector calculation unit 2407 is mainly configured to perform network computation at a non-convolutional/fully connected layer of a neural network, for example, batch normalization (batch normalization), pixel-level summation, and upsampling on a feature plane.

In some implementations, the vector calculation unit 2407 can store a processed output vector in the unified memory 2406. For example, the vector calculation unit 2407 may apply a linear function or a non-linear function to the output of the operation circuit 2403, for example, perform linear interpolation on a feature map extracted by a convolutional layer, or for another example, use a vector of accumulated values to generate an activation value. In some implementations, the vector calculation unit 2407 generates a normalized value, a pixel-level sum, or both. In some implementations, the processed output vector can be used as an activation input of the operation circuit 2403, for example, used at a subsequent layer in the neural network.

The instruction fetch buffer (instruction fetch buffer) 2409 connected to the controller 2404 is configured to store instructions used by the controller 2404.

The unified memory 2406, the input memory 2401, the weight memory 2402, and the instruction fetch buffer 2409 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

## Claims

**1.** A road topology detection method, comprising:

obtaining target information, wherein the target information is data collected for a road condition of a target road;

obtaining sequence information based on the target information by using a deep learning model, wherein the sequence information comprises point information of feature points in a topology of the target road and edge information of a feature line in the topology of the target road, the point information comprises physical positions and categories corresponding to the feature points, and the edge information comprises a connection between the feature points and a connection direction; and

determining the topology of the target road based on the sequence information.

2. The method according to claim 1, wherein the feature point is a road key point, a lane line key point, a lane centerline key point, or a road topology derivative point on the target road, and the feature line is a lane line segment, a lane centerline segment, a road segment, or a traffic entity.

3. The method according to claim 1 or 2, wherein the edge information further comprises a shape feature of the feature line.

4. The method according to any one of claims 1 to 3, wherein information about the topology further comprises an order of the feature points, and the order is consistent with an order obtained by performing a topological sorting method specified in a graph theory on the feature points.

5. The method according to claim 4, wherein the topological sorting method is depth-first traversal, breadth-first traversal, or a topological sorting method obtained through network learning.

6. The method according to any one of claims 1 to 5, wherein the category is one of the following:
a start node, a relay node, a fork node, and a merge node.

7. The method according to any one of claims 1 to 6, wherein obtaining the sequence information based on the target information by using the deep learning model comprises:

obtaining first sequence information and confidence of each basic unit in the first sequence information based on the target information and a first mask result by using the deep learning model, wherein the first mask result is an output mask result of an intermediate iteration process of the language model;

masking a basic unit, in the first sequence information, whose confidence is less than a threshold, to obtain a second mask result; and

obtaining second sequence information based on the target information and the second mask result by using the deep learning model, wherein the second sequence information is for obtaining the sequence information.

8. The method according to any one of claims 1 to 7, wherein the target information is image data or radar data, and pose information for collecting the image data or radar data.

9. A model training method, wherein the method comprises:

obtaining sequence information, wherein the sequence information comprises point information of a first feature point and a second feature point in a topology of a target road and edge information of a first feature line and a second feature line in the topology of the target road, the point information comprises physical positions and categories corresponding to the first feature point and the second feature point, and the edge information comprises a connection between the first feature point and the second feature point and a connection direction;

determining a prediction value of the point information of the second feature point and a prediction value of the edge information of the second feature line based on the point information of the first feature point and the edge information of the first feature line by using a deep learning model; and

updating the language model based on the prediction values, the point information of the second feature point, and the edge information of the second feature line.

10. The method according to claim 9, wherein the sequence information is determined based on image data, radar data, or map data.

11. A data processing apparatus, wherein the apparatus comprises:

an obtaining module, configured to obtain target information, wherein the target information is data collected for a road condition of a target road; and

a processing module, configured to: obtain sequence information based on the target information by using a deep learning model, wherein the sequence information comprises point information of feature points in a topology of the target road and edge information of a feature line in the topology of the target road, the point information comprises physical positions and categories corresponding to the feature points, and the edge information comprises a connection between the feature points and a connection direction; and

determine the topology of the target road based on the sequence information.

12. The apparatus according to claim 11, wherein the feature point is a road key point, a lane line key point, a lane centerline key point, or a road topology derivative point on the target road, and the feature line is a lane line segment, a lane centerline segment, a road segment, or a traffic entity.

13. The apparatus according to claim 11 or 12, wherein the edge information further comprises a shape feature of the feature line.

14. The apparatus according to any one of claims 11 to 13, wherein information about the topology further comprises an order of the feature points, and the order is consistent with an order obtained by performing a topological sorting method specified in a graph theory on the feature points.

15. The apparatus according to claim 14, wherein the topological sorting method is depth-first traversal, breadth-first traversal, or a topological sorting method obtained through network learning.

16. The apparatus according to any one of claims 11 to 15, wherein the category is one of the following:
a start node, a relay node, a fork node, and a merge node.

17. The apparatus according to any one of claims 11 to 16, wherein the processing module is specifically configured to:

obtain first sequence information and confidence of each basic unit in the first sequence information based on the target information and a first mask result by using the deep learning model, wherein the first mask result is an output mask result of an intermediate iteration process of the language model;

mask a basic unit, in the first sequence information, whose confidence is less than a threshold, to obtain a second mask result; and

obtain second sequence information based on the target information and the second mask result by using the deep learning model, wherein the second sequence information is for obtaining the sequence information.

18. The apparatus according to any one of claims 11 to 17, wherein the target information is image data or radar data, and pose information for collecting the image data or radar data.

19. A model training apparatus, wherein the apparatus comprises:

an obtaining module, configured to obtain sequence information, wherein the sequence information comprises point information of a first feature point and a second feature point in a topology of a target road and edge information of a first feature line and a second feature line in the topology of the target road, the point information comprises physical positions and categories corresponding to the first feature point and the second feature point, and the edge information comprises a connection between the first feature point and the second feature point and a connection direction;

a processing module, configured to determine a prediction value of the point information of the second feature point and a prediction value of the edge information of the second feature line based on the point information of the first feature point and the edge information of the first feature line by using a deep learning model; and

an updating module, configured to update the language model based on the prediction values, the point information of the second feature point, and the edge information of the second feature line.

20. The apparatus according to claim 19, wherein the sequence information is determined based on image data, radar data, or map data.

21. A computing device, wherein the computing device comprises a memory and a processor, the memory stores code, and the processor is configured to: obtain the code, and perform the method according to any one of claims 1 to 10.

**22.** A computer storage medium, wherein the computer storage medium stores one or more instructions, and when the instructions are executed by one or more computers, the one or more computers are enabled to implement the method according to any one of claims 1 to 10.

**23.** A computer program product, comprising code, wherein when the code is executed, the method according to any one of claims 1 to 10 is implemented.

**24.** A chip, comprising a processor, wherein the processor is configured to support a data processing apparatus in implementing the method according to any one of claims 1 to 10.

FIG. 1

FIG. 2

FIG. 3

FIG. 4

Data collection device 260

Image processing system 200

Data stream

Database 230

**Perform a plurality of types of ground-truth annotation**

Training device 220

Data stream

Execution device 210

Client device 240

Input data

I/O interface 212

Target model 201

Computing module 211

Data storage system 250

Output a result

FIG. 5

Camera  ...  Camera       SICK  IBEO  LiDAR

Traffic light    **To-be-detected image**    Traffic sign    Dynamic/Static obstacle    Map construction

Prior environment knowledge ...

**Trained target model**

Road environment model

Environmental sensing system

**Predicted lane line**    ...    Occupancy grid map

Task road network

Digital map

Traffic rules

Prior driving knowledge

...

Global planning

Driving scenario

Behavior decision-making

Behavior decision-making subsystem

Driving behavior instruction

Motion planning subsystem

Autonomous decision-making system

Driving track

Control subsystem

Steering wheel, accelerator, brake, and the like

Execution subsystem

Control system

FIG. 6

Cloud platform

Road topology generation service

**Cloud environment**

1. Activate a content review service

2. Download an SDK

4. Invoke the service

5. The service responds

Local development environment

3. Import an environment configuration and an SDK project

Application

FIG. 7

Obtain sequence information, where the sequence information includes point information of a first feature point and a second feature point in a topology of a target road and edge information of a first feature line and a second feature line in the topology of the target road, the point information includes physical positions and categories corresponding to the first feature point and the second feature point, and the edge information includes a connection between the first feature point and the second feature point and a connection direction

801

Determine a prediction value of the point information of the second feature point and a prediction value of the edge information of the second feature line based on the point information of the first feature point and the edge information of the first feature line by using a deep learning model

802

Update the language model based on the prediction values, the point information of the second feature point, and the edge information of the second feature line

803

FIG. 8

Obtain target information, where the target information is data collected for a road condition of a target road

901

Obtain sequence information based on the target information by using a deep learning model, where the sequence information includes point information of feature points in a topology of the target road and edge information of a feature line in the topology of the target road, the point information includes physical positions and categories corresponding to the feature points, and the edge information includes a connection between the feature points and a connection direction

902

Determine the topology of the target road based on the sequence information

903

FIG. 9

FIG. 10A

**Effective RoadTopoSeq**      **RoadTopoSeq argument**

Target

Prediction

$L_{CE}$

Ego-car feature

**Transformer decoder**    6x

Input

FIG. 10B

FIG. 10C

FIG. 10D

FIG. 11

FIG. 12

FIG. 13

FIG. 14

EP 4 742 191 A1

FIG. 15

**BEV encoder**

**Transformer**

**Ego-car feature**

**Road network**

FIG. 16

Obtain high-precision map data

Pre-training

Pre-training

Obtain training data

Full training

Full training

Online inference

Online inference

FIG. 17

43

Data stream generation based on ground truths

Road topology information → Language synthesizer →

Top labels: continue | fork index=0 | merge index=3 | continue | continue | continue | continue | continue | continue | merge index=1 | fork index=K

Sequence: 0 | 1 | 2 | 3 | 4 | 7 | 6 | 5 | 8 | 9 | A | B | C | D | F | E | H | G | I | K | J | L | ...

Bottom labels: start | continue | continue | continue | fork index=7 | fork index=5 | continue | merge index=8 | merge index=8 | merge index=3 | continue

→ START | x:0 | y:15

FIG. 18

FOV           TR-RNN [10]   PTLR/TR [10]      AR-RNTR        GT
(Ours)

FIG. 19

FIG. 20

FIG. 21

2200

Terminal device

Antenna

Antenna

| Receiver 2201 | Transmitter 2202 |
|---|---|

Processor 2203

| Memory 2204 | Application processor 22031 | Communication processor 22032 |
|---|---|---|

FIG. 22

FIG. 23

Host CPU

External memory

Weight memory 2402

Input memory 2401

Operation circuit 2403

Vector calculation unit 2407

Accumulator 2408

Direct memory access controller 2405

Unified memory 2406

Controller 2404

Instruction fetch buffer 2409

Bus interface unit 2410

Neural network processing unit 2400

FIG. 24

| INTERNATIONAL SEARCH | International application No. |
|---|---|
| | **PCT/CN2024/105917** |

**A. CLASSIFICATION OF SUBJECT MATTER**

G06V 20/56(2022.01)i

According to International Patent Classification (IPC) or to both national classification and IPC

**B. FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 道路, 拓扑, 检测, 目标, 路况, 采集, 深度, 学习, 序列, 特征点, 特征线, 位置, 类别, 物理, 连接, 方向, 关系, road, topology, detect, target, information, feature, point, line, sequence, deep

**C. DOCUMENTS CONSIDERED TO BE RELEVANT**

| Category* | Citation of document, with indication, where appropriate, of the relevant passages | Relevant to claim No. |
|---|---|---|
| PX | CN 117115766 A (HUAWEI TECHNOLOGIES CO., LTD.) 24 November 2023 (2023-11-24) claims 1-24 | 1-24 |
| X | CN 112327337 A (BEIJING DIDI INFINITY TECHNOLOGY AND DEVELOPMENT CO., LTD.) 05 February 2021 (2021-02-05) description, paragraphs [0024]-[0114] | 1-6, 8, 11-16, 18, 21-24 |
| A | CN 114882457 A (HUAWEI TECHNOLOGIES CO., LTD.) 09 August 2022 (2022-08-09) entire document | 1-24 |
| A | CN 114626169 A (BEIJING BAIDU NETCOM SCIENCE AND TECHNOLOGY CO., LTD.) 14 June 2022 (2022-06-14) entire document | 1-24 |
| A | US 2021302585 A1 (BEIJING JINGDONG SHANGKE INFORMATION TECHNOLOGY CO., LTD. et al.) 30 September 2021 (2021-09-30) entire document | 1-24 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2024** | **24 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH
### Information on patent family members

International application No.

**PCT/CN2024/105917**

| Patent document cited in search report | | | Publication date (day/month/year) | Patent family member(s) | | | Publication date (day/month/year) |
|---|---|---|---|---|---|---|---|
| CN | 117115766 | A | 24 November 2023 | None | | | |
| CN | 112327337 | A | 05 February 2021 | None | | | |
| CN | 114882457 | A | 09 August 2022 | None | | | |
| CN | 114626169 | A | 14 June 2022 | None | | | |
| US | 2021302585 | A1 | 30 September 2021 | JP | 2021531462 | A | 18 November 2021 |
| | | | | JP | 7351487 | B2 | 27 September 2023 |
| | | | | WO | 2020034903 | A1 | 20 February 2020 |

Form PCT/ISA/210 (patent family annex) (July 2022)

**EP 4 742 191 A1**